# FASCICULE DE BREVET EUROPEEN

(11) **EP 2 763 296 B1**
(45) Date de publication et mention de la délivrance du brevet: **05.06.2019**
(21) Numéro de dépôt: 13006016.3
(22) Date de dépôt: 30.12.2013
(51) Int. Cl.: H02K 21/24

(54) **Machine électrique avec pièces intermédiaires à plusieurs entrefers et flux magnétique 3D**
Elektrische Maschine mit Zwischenstücken mit mehreren Luftspalten und 3D-Magnetfluss
Electrical machine having intermediate parts with a plurality of air gaps and 3D magnetic flux

(30) Priorité: 09.01.2013 FR 1300031
(43) Date de publication de la demande: 06.08.2014
(73) Titulaire: Airbus Helicopters, 13725 Marignane Cedex (FR); SINTERTECH, 38113 Veurey - Voroize (FR); MBDA France, 75016 Paris (FR)
(72) Inventeur: Mariotto, Damien, F-13410 Lambesc (FR)
(74) Mandataire: GPI & Associés

(56) Documents cités:
- US-A1- 2006 244 329
- Jacek F. Gieras et al.: "Axial Flux Permanent MagnetBrushless Machines", 2004, Kluwer Academic Publishers, Dordrecht, XP002720322, ISBN: 1-4020-2661-7 pages 6-7, * alinéa [1.5Topologiesandgeometries] * * page 6 - page 7; figure 1b *

## Description

La présente invention est du domaine des machines électriques. Elle concerne une machine électrique réversible avec pièces intermédiaires à plusieurs entrefers et flux magnétique 3D. Une telle machine électrique peut être monophasée ou bien polyphasée.

Une machine électrique transformant de l'énergie électrique en énergie mécanique, par exemple pour la propulsion d'un véhicule, est appelée un moteur. Une machine électrique transformant de l'énergie mécanique en énergie électrique, par exemple pour la génération d'un courant électrique, est appelée un générateur ou une génératrice. On peut distinguer, parmi les générateurs, les alternateurs fournissant un courant électrique alternatif et les dynamos fournissant un courant électrique continu.

Un moteur électrique peut être adapté pour être alimenté par un courant électrique continu ou bien un courant électrique alternatif monophasé ou polyphasé, tel un courant électrique triphasé. De même, un alternateur peut être adapté pour générer un courant électrique alternatif monophasé ou polyphasé.

Cependant, un courant électrique alternatif polyphasé doit être équilibré afin de permettre un fonctionnement fluide et sans à coup de la machine électrique. Un tel courant électrique alternatif polyphasé équilibré, formant alors un système électrique équilibré, comporte au moins trois phases et se caractérise notamment par le fait que la somme des tensions (ou des courants) complexes de chaque phase est nulle, sans pour autant que l'amplitude de la tension (ou du courant) de chaque phase soit nulle simultanément. De plus, un même décalage est présent entre chaque phase de ce courant.

Une machine électrique est dite réversible quand elle peut être à la fois un moteur et un générateur. Toute machine électrique peut être réversible, la distinction entre les fonctions moteur et générateur ne se faisant que par rapport à la destination et l'utilisation de cette machine électrique. On parle également de moteur-générateur si les deux fonctions sont disponibles sur la machine électrique.

Les moteurs couramment utilisés peuvent être rotatifs, c'est-à-dire produisant un déplacement angulaire et/ou un couple, ou bien linéaires, c'est-à-dire produisant un déplacement linéaire et/ou une force.

Par contre, les génératrices sont essentiellement rotatives.

Une machine électrique tournante est un dispositif électromécanique comportant au moins un stator qui est fixe et au moins un rotor tournant par rapport à ce stator et qui peut être placé à l'intérieur ou à l'extérieur du stator. La rotation de ce rotor est générée par l'interaction entre deux champs magnétiques attachés respectivement à ce stator et à ce rotor, créant un couple magnétique au rotor. On parle alors respectivement d'un « champ magnétique statorique » et d'un « champ magnétique rotorique ».

La suite de cette description se limitant aux machines électriques tournantes, on utilisera plus simplement les termes « machine électrique » pour désigner une machine électrique tournante. De même, les termes « moteur électrique » désigneront un moteur électrique rotatif et le terme « génératrice » désignera une génératrice électrique rotative.

Les différentes technologies de machines électriques se distinguent essentiellement par la manière de générer ces champs magnétiques statorique et rotorique.

Par exemple, dans un moteur électrique à courant continu, le stator comporte des éléments magnétiques, qui peuvent être des aimants permanents ou bien des aimants non permanents, appelés plus communément électro-aimants et constitués généralement par un ou plusieurs enroulements de conducteurs électriques alimentés en courant électrique continu. On utilisera par la suite le terme « bobinage » pour désigner un ensemble d'un ou plusieurs enroulements de conducteurs électriques. Dans les deux cas, chaque aimant comporte deux pôles, un pôle nord et un pôle sud, et un champ magnétique statorique fixe est alors créé. Par contre, le rotor comporte des aimants non permanents constitués par un bobinage créant un champ magnétique rotorique lorsqu'il est traversé par un courant électrique continu. Lors de la rotation de ce rotor, un collecteur rotatif permet d'inverser, au moins une fois par tour, le sens de ce courant électrique continu traversant le bobinage du rotor, inversant ainsi les pôles des aimants non permanents de ce rotor et modifiant ainsi le sens du champ magnétique rotorique.

Ainsi, un décalage entre les champs magnétiques statorique et rotorique provoque un couple magnétique au rotor, un pôle nord du stator repoussant par exemple un pôle nord du rotor et attirant un pôle sud du rotor. Par suite, une rotation du rotor par rapport au stator est générée.

Un inconvénient principal d'un tel moteur électrique à courant continu réside dans les contacts électriques nécessaires entre le bobinage du rotor et le collecteur rotatif. Ces contacts, obtenus par exemple par des balais, peuvent créer des arcs électriques générant notamment de l'usure et des parasites qui nécessitent par la suite des fréquences de maintenance élevées de la machine électrique. De plus, ce type de moteur électrique n'est pas adapté aux hautes vitesses de rotation et consomme de l'énergie par frottement réduisant son rendement. Enfin, il peut être complexe à réaliser.

Ces inconvénients ont été éliminés grâce à la technologie des moteurs sans balai, également dénommé « moteur brushless ».

Le rotor d'une telle machine électrique comporte un ou plusieurs aimants permanents alors que le stator comporte un bobinage constituant des aimants non permanents. Une telle machine peut également disposer d'un moyen de connaître la position du rotor, via l'utilisation d'un capteur par exemple, ainsi que d'un système électronique de commande assurant la commutation du courant électrique. Un courant électrique alternatif circule alors dans le bobinage du stator. Ainsi, ce système électronique de commande permet d'assurer l'orientation et le sens du champ magnétique statorique par rapport au champ magnétique rotorique, et par suite la rotation du rotor par rapport au stator, le champ statorique tournant accrochant le champ rotorique.

De plus, au sein du bobinage du stator, un ou plusieurs enroulements peuvent être regroupés afin de former différentes phases du stator, chaque phase ayant un même décalage par rapport aux autres phases. Chaque phase est alimentée en mode moteur par une phase d'un courant électrique alternatif polyphasé et génère respectivement un champ magnétique statorique, chaque champ magnétique statorique associé à une phase étant également décalé par rapport aux autres champs magnétiques statoriques associés aux autres phases. Les champs magnétiques statoriques, lorsqu'ils sont issus d'un même courant électrique polyphasé formant un système électrique équilibré, s'additionnent pour former un unique champ magnétique statorique, appelé résultante statorique, tournant à une fréquence de synchronisme. Cette résultante statorique entraine alors en rotation le champ rotorique et, par suite, crée une rotation du rotor par rapport au stator.

De même, en mode générateur, une rotation du rotor entraine la rotation du champ rotorique et l'apparition d'une résultante statorique tournante, qui se décompose en un champ magnétique pour chaque phase du stator, générant alors l'apparition d'un courant électrique alternatif polyphasé.

Parmi les machines électriques à courant électrique alternatif, on peut distinguer les machines électriques synchrones et asynchrones.

Les machines électriques synchrones, dont fait partie le moteur sans balai, dispose d'un rotor comportant un ou plusieurs aimants permanents et un stator comportant un bobinage muni de plusieurs enroulements pouvant former une ou plusieurs phases. De fait, lorsqu'ils sont traversés par un ou plusieurs courants électriques alternatifs d'un système électrique polyphasé équilibré, les enroulements du bobinage du stator créent un ou plusieurs champs magnétiques statoriques tournants dont la résultante statorique accroche le champ magnétique rotorique à la fréquence de synchronisme de la machine et, par suite, entraîne la rotation du rotor.

Inversement, une rotation du rotor, générée par une puissance mécanique externe, crée une rotation du champ magnétique rotorique, qui provoque la création d'un ou plusieurs champs magnétiques statoriques tournants formant la résultante statorique et, par suite, l'apparition et la circulation d'un ou plusieurs courants électriques alternatifs dans le bobinage du stator.

Les aimants permanents du rotor peuvent être remplacés par un bobinage alimenté en courant électrique continu, constituant des aimants non permanents, et créant ainsi un champ magnétique rotorique. Le courant électrique continu peut être délivré par un générateur de courant électrique tel qu'une batterie ou un condensateur.

La fréquence de rotation du rotor d'un moteur électrique synchrone est proportionnelle à la fréquence du courant électrique alternatif appliqué au niveau du stator. De même, la fréquence du courant électrique alternatif généré dans une génératrice synchrone est proportionnelle à la fréquence de rotation du rotor. La machine synchrone est souvent utilisée comme génératrice, par exemple comme alternateur dans les centrales électriques.

Les machines électriques asynchrones disposent d'un rotor comportant un bobinage dont les enroulements sont en court-circuit et un stator comportant un bobinage, constituant des aimants non permanents. De fait, lorsque le bobinage de ce stator est traversé par un courant électrique alternatif, il crée un ou plusieurs champs magnétiques statoriques tournants dont la résultante statorique entraîne l'apparition d'un courant électrique rotorique dans le bobinage du rotor, générant alors un couple magnétique sur ce rotor et, par suite, la rotation de ce rotor par rapport au stator.

Inversement, une rotation du rotor, générée par une puissance mécanique externe, entrainera l'apparition et la circulation d'un courant électrique alternatif dans le bobinage du stator. Pour cela, il faudra connecter la machine électrique à un réseau, comportant par exemple au moins un convertisseur et une batterie, afin de lui fournir l'énergie réactive nécessaire à son fonctionnement en mode génératrice.

Bien que la fréquence de rotation du champ magnétique statorique soit proportionnelle à la fréquence du courant électrique alternatif qui traverse le bobinage du stator, la fréquence de rotation du rotor d'un moteur électrique asynchrone n'est pas forcément proportionnelle à cette fréquence du courant électrique alternatif, une vitesse de glissement pouvant apparaître entre le rotor et le champ magnétique statorique. De même, la fréquence du courant électrique alternatif généré dans une génératrice asynchrone n'est pas forcément proportionnelle à la fréquence de rotation du rotor.

La machine asynchrone a longtemps été utilisée uniquement en tant que moteur électrique, par exemple dans le transport pour la propulsion des navires et des trains ainsi que dans l'industrie pour des machines-outils. Grâce à l'utilisation de l'électronique de puissance, de telles machines électriques sont également utilisées aujourd'hui en tant que génératrices, par exemple dans les éoliennes.

Par ailleurs, l'utilisation de telles machines électriques réversibles à bord de véhicules, tels que des automobiles ou des aéronefs à voilures tournantes, se développe afin de réaliser une installation motrice hybride utilisant deux types d'énergie pour la propulsion de ce véhicule, d'une part thermique et d'autre part électrique. Cependant, quelques contraintes, telles que la puissance massique de ces machines électriques et des moyens de stockage de l'énergie électrique, en limitent aujourd'hui l'utilisation.

Quelque soit le type de machines électriques réversibles, un flux magnétique circule entre le rotor et le stator à travers les différents aimants permanents ou non permanents de ce rotor et de ce stator, ce flux étant orienté par les pôles magnétiques de ces aimants. En effet, ce flux magnétique circule d'un pôle nord vers un pôle sud à travers l'entrefer situé entre chaque pôle du stator et du rotor ainsi qu'entre un pôle sud et un pôle nord au niveau du stator et du rotor.

De plus, les aimants du rotor, qu'ils soient permanents ou non permanents, peuvent être orientés de deux manières conduisant à au moins trois types de machines électriques.

D'une part, les aimants peuvent être orientés perpendiculairement à l'axe de rotation de la machine électrique, c'est-à-dire que les deux pôles de chaque aimant sont orientés perpendiculairement à cet axe de rotation. On dit alors que ces aimants sont orientés radialement ou plus simplement que ces aimants sont radiaux. Un flux magnétique radial est alors créé au niveau de ces aimants, c'est à dire perpendiculairement à cet axe de rotation. L'entrefer au niveau de ces aimants se situe alors parallèlement à cet axe de rotation.

D'autre part, les aimants peuvent être orientés parallèlement à l'axe de rotation de la machine électrique, c'est-à-dire que les deux pôles de chaque aimant sont orientés parallèlement à cet axe de rotation. On dit alors que ces aimants sont orientés axialement ou plus simplement que ces aimants sont axiaux. Un flux magnétique axial est alors créé au niveau de ces aimants, c'est à dire parallèlement à cet axe de rotation. L'entrefer au niveau de ces aimants se situe alors perpendiculairement à cet axe de rotation.

Ces différentes orientations des aimants permettent d'orienter le flux magnétique circulant dans la machine électrique, qui est alors, selon un premier type de machines électriques, axial, par exemple les machines électriques à rotor à disque ou, selon un second type de machines électriques, radial, par exemple les machines électriques à rotor cylindrique. Selon un troisième type de machines électriques, il est également possible d'utiliser au sein de la même machine électrique des aimants radiaux et axiaux, de telle sorte qu'un flux magnétique à la fois radial et axial est créé. On parle alors de flux magnétique multi-entrefer. Par contre, quelque soit l'orientation des aimants, un seul et même flux magnétique circule dans l'ensemble de la machine électrique.

Aujourd'hui, les machines électriques utilisent diverses configurations et orientations du flux magnétique, c'est à dire un flux magnétique radial ou axial, afin de mieux répondre au besoin du client, aussi bien en termes de performance que de dimensions. Par exemple, les machines à aimants permanents à flux axial à fort couple sont plus courtes axialement et grandes radialement alors que celles à flux radial sont petites radialement et longues axialement.

De plus, la puissance massique de ces machines électriques, c'est-à-dire le rapport de leur puissance par leur masse, ainsi que leur coût de fabrication varient selon les configurations de flux magnétique utilisées, sans pour autant être optimum.

Les machines électriques à griffes avec aimants permanents sont aujourd'hui les plus prisées grâce à un rapport performance/coût élevé comparé à d'autres technologies de machines, dû notamment à l'utilisation d'aimants permanents, à l'utilisation d'alliage magnétique doux pressé et cuit (Soft Magnetic Compound) à la place d'assemblage de tôles feuilletées, à l'utilisation de bobinages axiaux et au fait qu'ils mettent en jeu peu de pièces. L'utilisation d'un alliage magnétique doux pressé et cuit, qui a notamment des caractéristiques isotropes dans les trois directions, permet de fabriquer des formes complexes en trois dimensions. Cependant la puissance massique n'est pas optimum car ces machines électriques utilisent seulement une orientation du flux magnétique créé à partir du champ magnétique généré par le stator en mode de fonctionnement moteur. En effet, ce flux magnétique circule essentiellement de façon radiale ou axiale par rapport à l'axe de la machine. Ainsi, selon cette technologie, il faudrait pour avoir des machines à fort couple augmenter soit le rayon de l'entrefer pour les machines radiales, soit sa longueur pour les machines axiales ce qui conduirait à des machines volumineuses et lourdes. Cette technologie n'utilise donc pas toutes les possibilités d'orientation du flux magnétique et ne permet pas d'avoir des machines électriques à fort couple qui soient compactes et légères.

Le document US2006244329 décrit une machine électrique à un seul entrefer dont une face de la culasse est munie de dents et de pièces intermédiaires conductrices pour améliorer l'efficacité de la machine.

Par ailleurs, on connaît le document EP0613229 qui décrit un moteur à courant continu sans balai comportant un stator et un rotor. Le rotor est constitué par une culasse de rotor circulaire munie de plusieurs pôles magnétiques, un pôle nord et un pôle sud étant disposés alternativement. Le stator comporte deux culasses de stator circulaires assemblées à l'intérieur desquelles est positionné un bobinage. Chaque culasse de stator comporte des pattes repliées, une patte repliée de chaque culasse de stator se trouvant alternativement en face d'un pôle magnétique de la culasse de rotor et formant ainsi un entrefer. De plus, lorsqu'il est parcouru par un courant électrique alternatif, le bobinage magnétise les pattes repliées de chaque culasse de stator formant alternativement un pôle nord et un pôle sud. Ainsi, ces différents pôles magnétiques présents sur le stator et le rotor permettent de générer un mouvement de rotation du rotor. Ce document décrit différents moyens d'assurer des positions angulaires précises et stables entre les deux culasses de stator.

Le document FR2828027 décrit pour sa part une machine à structure homopolaire comportant un stator et un rotor. Le stator comporte une ou plusieurs culasses circulaires, chaque culasse étant constituée de deux couronnes identiques et indexées angulairement à l'intérieur desquelles est positionné un bobinage. Chaque couronne comporte des pattes repliées formant alternativement un pôle nord et un pôle sud lorsque le bobinage est parcouru par un courant électrique. Lorsque le stator comporte 03B2306 EP - Requête principale - propre plusieurs culasses, celles-ci sont séparées par une entretoise en matériau amagnétique. De plus, chaque bobinage peut être connecté à une phase différente dans le cas d'un moteur polyphasé.

Le document EP1770846 décrit pour sa part une machine électrique à flux radial comportant un stator et un rotor. Le rotor comporte des aimants permanents alors que le stator comporte une ou plusieurs culasses circulaires, chaque culasse étant constituée de deux couronnes identiques et indexées angulairement à l'intérieur desquelles est positionné un bobinage. Chaque couronne est réalisée en poudre magnétique compacté selon la direction de l'axe de rotation de la couronne et comporte des griffes formant alternativement un pôle nord et un pôle sud lorsque le bobinage est parcouru par un courant électrique. Trois culasses déphasé de 120° sont assemblées et isolées par une résine isolante permettant ainsi de former un stator pour une machine électrique triphasée.

De plus, le document WO2004/107541 fait état d'une machine électrique à flux transverse comportant un stator et un rotor. Le stator comporte un bobinage et deux culasses circulaires positionnées à chaque extrémité de ce bobinage. Chaque culasse comporte des pattes en forme de « C » repliées sur la surface circonférentielle du bobinage ainsi qu'une multitude de pièces conductrices positionnées sur cette surface circonférentielle et réparties de manière uniforme entre les pattes en forme de « C », formant ainsi plusieurs rangées selon la direction axiale de la machine électrique. Le rotor comporte une multitude d'aimants positionnés également sur plusieurs rangées selon la direction axiale de la machine électrique, faisant ainsi face à chaque patte en forme de « C » et à chaque pièce conductrice du stator et formant un entrefer avec celles-ci. Lorsque le bobinage est traversé par un courant électrique alternatif, les pattes en forme de « C » ainsi que les pièces conductrices sont magnétisées et un flux magnétique circule alors radialement entre d'une part les aimants du rotor et d'autre part les pattes en forme de « C » et les pièces conductrices du stator, générant ainsi un mouvement de rotation du rotor.

On connaît aussi le document CN101212150 qui décrit une machine électrique à double entrefer comportant un stator et un rotor. Le rotor comporte deux groupes d'aimants, un groupe étant positionné de façon radiale et l'autre groupe de façon axiale vis à vis de l'axe de rotation de la machine électrique. De même, le stator comporte un bobinage et deux groupes de pôles magnétiques, un groupe étant positionné en vis à vis des aimants radiaux du rotor créant ainsi un flux magnétique radial et l'autre groupe en vis à vis des aimants axiaux du rotor créant ainsi un flux magnétique axial. De fait, un double entrefer est créé entre le rotor et le stator, à la fois radial et axial. Les pôles magnétiques du stator et du rotor sont constitués par une alternance de pôles nord et sud de façon circonférentielle. Par contre, un pôle radial et un pole axial adjacents sont identiques. Ainsi, le flux magnétique circulant dans la machine électrique peut se diviser, afin de traverser le double entrefer radialement et axialement pour circuler entre les pôles du stator et du rotor, puis se rejoindre ensuite au niveau du stator et du rotor.

Enfin, les documents FR2961037 et FR2959621 concernent une machine électrique homopolaire comportant un rotor et un stator comprenant une ou plusieurs phases. Le rotor comporte plusieurs aimants permanents et chaque phase du stator est constituée par un bobinage et une culasse munie de pôles magnétiques alternés, chaque culasse étant formée par deux couronnes. Le document FR2961037 décrit plus particulièrement la forme des dents que comporte chaque couronne et qui constitue chaque pôle magnétique du stator permettant d'optimiser la circulation du flux magnétique. En effet, une telle forme de dent permet au flux magnétique de circuler au maximum dans le circuit magnétique, constitué entre autres par la culasse du stator, en limitant ainsi sa circulation dans l'air ainsi que les fuites magnétiques. Le document FR2959621 décrit pour sa part comment réaliser l'indexage angulaire des culasses constituant chaque phase de cette machine électrique homopolaire, en utilisant un disque intermédiaire positionné entre chaque culasse. Chaque disque intermédiaire comporte des doigts d'indexage coopérant avec des trous positionnés dans chaque culasse afin d'assurer le calage angulaire correspondant à chaque phase.

La présente invention a alors pour objet de proposer une machine électrique permettant de s'affranchir des limitations mentionnées ci-dessus afin d'améliorer l'utilisation du champ magnétique généré au niveau du stator et d'augmenter ainsi les performances d'une telle machine électrique, notamment sa puissance massique grâce à la présence d'au moins deux entrefers et à la circulation d'un flux magnétique en trois dimensions.

Selon l'invention, une machine électrique comporte un axe de rotation, un stator muni d'une armature et d'au moins une unité excitatrice annulaire ainsi qu'un rotor tournant autour de cet axe de rotation et muni d'une structure et d'au moins une unité réceptrice annulaire. Le rotor peut être interne et/ou externe par rapport au stator, c'est-à-dire de façon que le rotor tourne à l'intérieur ou à l'extérieur du stator, mais une partie du rotor peut également tourner à l'intérieur du stator alors qu'une autre partie de ce rotor tourne à l'extérieur de ce stator. Chaque unité excitatrice comporte un bobinage, au moins deux culasses annulaires et une pluralité de pièces intermédiaires, ce bobinage étant positionné à l'intérieur des culasses et disposant d'au moins deux faces, ces culasses comportant une pluralité de premières dents et chaque pièce intermédiaire comportant deux extrémités formant deux secondes dents. Chaque unité réceptrice comporte une pluralité d'aimants et coopère avec une seule unité excitatrice, chaque aimant ayant un premier pôle nord et un premier pôle sud. Le nombre total des aimants est égal au nombre total des premières et des secondes dents présentes sur les culasses.

Chaque unité excitatrice et chaque unité réceptrice ont une forme annulaire autour de l'axe de rotation de la machine électrique. Chaque culasse a également une forme annulaire autour de cet axe de rotation afin que l'ensemble des culasses encadre le bobinage de chaque unité excitatrice.

Ce bobinage peut être composé d'un ou plusieurs enroulements de conducteurs électriques. Lorsque ce bobinage est parcouru par un courant électrique, les premières dents de chaque culasse et les secondes dents des pièces intermédiaires sont magnétisées afin de former des seconds pôles magnétiques nord et sud.

Les culasses ainsi que la structure du rotor, principalement dans les zones où se trouvent les aimants, sont réalisées en un matériau ferromagnétique permettant de conduire le flux magnétique sans avoir de pertes par courant de Foucault. Par exemple, elles peuvent être fabriquées à partir de poudre d'alliage d'acier magnétique doux pressée et cuite et/ou usinée. Elles peuvent également être réalisées à partir de tôles d'acier feuilleté et empilées ou bien de pièces d'acier assemblées.

L'armature du stator est réalisée dans un matériau amagnétique comme par exemple de l'aluminium, de la fibre de verre ou de carbone, de la résine ou bien de la matière plastique. De tels matériaux ne sont pas conducteurs du flux magnétique et empêchent ainsi d'avoir des courts-circuits de flux magnétique et, par suite, des fuites magnétiques.

Cette machine électrique est remarquable en ce que chaque culasse comporte au moins deux flancs, dont deux flancs extrêmes, et les premières dents de chaque culasse sont réparties sur ces deux flancs extrêmes et de façon régulière angulairement autour de l'axe de rotation sur chaque flanc extrême. Ces deux flancs extrêmes constituent les deux extrémités de la culasse, d'autres flancs éventuels, désignés par la suite « flancs intermédiaires » étant positionnés entre ces deux flancs extrêmes. De plus, les pièces intermédiaires sont positionnées sur au moins un rang annulaire sur au moins deux des faces du bobinage entre les premières dents de deux culasses.

Ces pièces intermédiaires sont agencées sur chaque face du bobinage de telle façon qu'une première extrémité de chaque pièce intermédiaire d'un premier rang s'emboîte entre deux premières dents d'une culasse en maintenant une distance entre chaque seconde dent formée par les premières extrémités de chaque pièce intermédiaire et deux premières dents de cette culasse. Ensuite, une seconde extrémité de chaque pièce intermédiaire d'un rang s'emboîte entre deux premières extrémités de deux pièces intermédiaires d'un rang suivant en maintenant une distance entre chaque seconde dent formée par ces secondes extrémités et deux premières dents formées par ces premières extrémités. Enfin, une seconde extrémité de chaque pièce intermédiaire du dernier rang s'emboîte entre deux premières dents de l'autre culasse de cette face du bobinage en maintenant une distance entre chaque seconde dent formée par ces secondes extrémités et deux premières dents de cette autre culasse.

Cette distance est de préférence constante et identique que ce soit entre chaque pièce intermédiaire ainsi qu'entre chaque pièce intermédiaire et les culasses. Cette distance est suffisante pour maintenir une isolation magnétique afin de ne pas avoir de court-circuit magnétique entre chaque pièce intermédiaire ainsi qu'entre chaque pièce intermédiaire et les culasses et permet ainsi de limiter, voire de supprimer, les fuites de flux magnétique.

Suivant si le nombre de rangs des pièces intermédiaires est pair ou impair, les premières dents de deux culasses sont respectivement tête-bêche ou bien face à face sur une même face du bobinage et forment alternativement des seconds pôles nord et des seconds pôles sud. Les premières dents de deux culasses sont tête-bêche sur une face du bobinage lorsqu'elles sont décalées angulairement pour s'emboiter les unes dans les autres.

De plus, les premières dents de deux culasses et les secondes dents des pièces intermédiaires forment sur ces faces du bobinage alternativement des seconds pôles nord et des seconds pôles sud, de telle sorte que deux premiers pôles adjacents soient de polarités opposées, chaque pièce intermédiaire comportant un pôle nord et un pôle sud.

Chaque unité réceptrice comporte au moins deux séries d'aimants, chaque série étant constituée d'au moins deux rangées d'aimants et ces aimants étant répartis angulairement de façon régulière autour de l'axe de rotation. Chaque aimant a un premier pôle situé en vis-à-vis de l'unité excitatrice, et plus précisément en vis-à-vis d'une des faces du bobinage sur laquelle sont positionnées les pièces intermédiaires, et l'autre premier pôle situé face à la structure du rotor. Chaque rangée est agencée de telle sorte que deux premiers pôles adjacents soient de polarités opposées, chaque rangée étant constituée d'une alternance des premiers pôles nord et des premiers pôles sud. Chaque série est située en vis-à-vis d'une des faces du bobinage sur laquelle sont positionnées les pièces intermédiaires, le nombre de rangées d'aimants étant égal au nombre de rangs de pièces intermédiaires de cette face du bobinage plus une unité. En effet, chaque rangée d'aimants coopère avec les seconds pôles constitués soit par les premières dents d'une culasse et une seconde dent de chaque pièce intermédiaires d'un rang, soit par une seconde dent de chaque pièce intermédiaires de deux rangs adjacents. Une série faisant face à une face du bobinage doit donc comporter un nombre d'aimants égal au nombre de seconds pôles présents sur cette face, c'est-à-dire le nombre de secondes dents des pièces intermédiaires de cette face et le nombre de premières dents de deux culasses.

De plus, au sein d'une unité réceptrice, chaque rangée d'aimants est liée directement ou par l'intermédiaire d'un matériau ferromagnétique à la structure du rotor, elle-même en un matériau ferromagnétique. Par ailleurs, chaque rangée d'aimants d'une série peut être isolée magnétiquement des autres rangées d'aimants de cette série afin d'éviter notamment les fuites magnétiques ou bien les échanges de flux magnétique entre ces rangées. Une telle isolation magnétique peut être réalisée par un matériau amagnétique, par exemple.

De même, chaque série d'aimants d'une unité réceptrice peut être isolée magnétiquement des autres séries d'aimants de cette unité réceptrice afin d'éviter les fuites magnétiques ou bien les échanges de flux magnétique entre ces séries. Une telle isolation magnétique peut être réalisée par un matériau amagnétique, par exemple.

Un entrefer est ainsi formé entre chaque série d'aimants et l'unité excitatrice et un flux magnétique circulant alors dans la machine électrique peut se diviser et se regrouper aux niveaux de chaque aimant d'une même rangée du rotor et de chaque culasse du stator.

En effet, suivant le nombre de culasses encadrant le bobinage de l'unité excitatrice, de préférence de deux à quatre, et la manière dont ces culasses encadrent ce bobinage, ces culasses peuvent comporter deux, trois ou quatre flancs, dont deux flancs extrêmes et éventuellement un ou deux flancs intermédiaires. Les premières dents de chaque culasse sont réparties sur ces deux flancs extrêmes. De plus, afin d'encadrer le bobinage, deux flancs extrêmes de deux culasses adjacentes sont placés sur une même face du bobinage et les pièces intermédiaires se positionnent sur au moins un rang entre les premières dents de ces deux culasses, les secondes dents des pièces intermédiaires s'emboîtant les unes dans les autres ainsi qu'entre les premières dents de ces deux culasses en maintenant une distance entre elles.

De plus, lorsque le bobinage est traversé par un courant électrique, chaque première dent et chaque seconde dent sont magnétisées afin de former alternativement un second pôle nord et un second pôle sud sur les faces du bobinage, deux seconds pôles adjacents étant de polarités opposées.

Ainsi, une culasse comporte des premières dents sur ses deux flancs extrêmes, ces premières dents peuvent être réparties de différentes façons entre ces deux flancs extrêmes.

Selon une première géométrie de culasse, les premières dents des deux flancs extrêmes d'une culasse sont réparties angulairement de façon régulière autour de l'axe de rotation alternativement sur les deux flancs extrêmes. Ainsi, chaque première dent d'un flanc extrême est située entre deux premières dents de l'autre flanc extrême de cette culasse, les deux flancs extrêmes ayant par exemple des formes équivalentes à deux signaux en opposition de phase.

Selon une seconde géométrie de culasse, les premières dents des deux flancs extrêmes d'une culasse sont positionnées face à face, les deux flancs extrêmes ayant alors des formes équivalentes à deux signaux en phase.

Outre ces deux géométries particulières de culasse, les premières dents d'un flanc extrême d'une culasse peuvent également prendre toutes les positions intermédiaires entre une position face à une première dent de l'autre flanc extrême et une position entre deux premières dents de l'autre flanc extrême, c'est-à-dire avoir un décalage quelconque entre une première dent d'un flanc extrême et une première dent de l'autre flanc extrême. Par contre, ces premières dents doivent toujours avoir le même décalage entre une première dent d'un flanc extrême et une première dent de l'autre flanc extrême de chaque culasse, ainsi qu'une même forme et les mêmes dimensions.

De même, les secondes dents de chaque pièce intermédiaire ont la même forme que les premières dents des culasses, afin notamment que ces secondes dents s'emboîtent entre les premières dents des culasses.

De plus, les premières dents de chaque culasse et les secondes dents de chaque pièce intermédiaire peuvent recouvrir de façon plus ou moins importante chaque face du bobinage.

Selon un premier recouvrement, l'extrémité de chaque seconde dent du dernier rang des pièces intermédiaires ne dépasse pas la face du bobinage sur laquelle ces pièces intermédiaires se trouvent, c'est à dire que ces secondes dents s'arrêtent avant la culasse avec laquelle elles s'emboîtent. De plus, chaque flanc intermédiaire de la culasse, quand elle en dispose d'un, dépasse de la face du bobinage sur laquelle il se trouve.

Inversement, selon un second recouvrement, l'extrémité de chaque seconde dent du dernier rang des pièces intermédiaires dépasse la face du bobinage sur laquelle ces pièces intermédiaires se trouvent, c'est à dire que ces secondes dents vont jusqu'à la face extérieure de la culasse avec laquelle elles s'emboîtent. De plus, chaque flanc intermédiaire de la culasse, quand elle en dispose d'un, ne dépasse pas de la face du bobinage sur laquelle il se trouve.

Avantageusement, ce second recouvrement permet d'avoir une surface des premières et des secondes dents, et par suite d'entrefer, plus importante. De la sorte, le couple et la puissance massique de la machine électrique selon l'invention sont plus importants pour des dimensions identiques de la machine électrique.

Par ailleurs, les aimants de chaque unité réceptrice sont répartis afin que leurs premiers pôles coopèrent avec les seconds pôles respectifs d'une unité excitatrice. Ces aimants sont pour cela répartis sur au moins deux séries d'au moins deux rangées d'aimants, chaque série étant positionnée en vis-à-vis d'une des faces sur laquelle sont positionnées les pièces intermédiaires.

Chaque rangée d'aimants est constituée d'une alternance des premiers pôles nord et des premiers pôles sud, chaque premier pôle se trouvant en vis-à-vis d'une première dent d'une culasse ou bien d'une seconde dent d'une pièce intermédiaire. Par suite, un entrefer est formé entre chaque série d'aimants et l'unité excitatrice.

De fait, cette répartition particulière des premiers pôles sur chaque unité réceptrice du rotor et des seconds pôles des culasses et de pièces intermédiaires du stator ainsi que leurs positionnements respectifs vis-à-vis d'au moins deux faces du bobinage de chaque unité excitatrice permettent un fonctionnement particulier de cette machine électrique selon l'invention.

En effet, un flux magnétique circule d'un pôle nord vers un pôle sud dans l'entrefer entre le stator et le rotor alors que ce flux magnétique circule d'un pôle sud vers un pôle nord dans le stator et le rotor. La machine électrique selon l'invention possède des premiers pôles et des seconds pôles de polarités alternées et répartis sur au moins deux faces du bobinage d'une unité excitatrice. De plus, l'alternance des seconds pôles magnétiques et le positionnement d'une seconde dent d'une pièce intermédiaire entre deux premières dents d'une culasse imposent d'avoir deux premières dents adjacentes sur un même flanc extrême de même polarité, les deux flancs extrêmes d'une culasse étant ainsi de polarités opposées.

Par suite, le flux magnétique circulant dans la machine électrique peut se diviser dans chaque culasse après un second pôle sud en se dirigeant vers au moins deux seconds pôles nord et se regrouper avant un second pôle nord de cette culasse en provenance d'au moins deux seconds pôles sud de cette culasse.

De même, le flux magnétique peut, dans le rotor, se diviser après chaque aimant de ce rotor vers au moins deux autres aimants de ce rotor et se regrouper avant chaque aimant du rotor en provenance d'au moins deux aimants de ce rotor.

Par contre, chaque pièce intermédiaire étant isolée magnétiquement les unes des autres, le flux magnétique ne peut ni se diviser ni se regrouper en traversant ces pièces intermédiaires.

Par exemple, selon la première géométrie de culasse, une première dent d'un flanc extrême, correspondant à un second pôle sud, est située entre deux premières dents de l'autre flanc extrême de cette culasse, correspondant à deux seconds pôles nord, c'est-à-dire qu'elle se situe à égale distance des deux seconds pôles nord qui sont les plus proches.

Ainsi, le flux magnétique circulant dans la machine électrique a tendance, après ce second pôle sud de la culasse, à se diviser principalement et de manière équivalente entre ces deux seconds pôles nord les plus proches. Une petite partie de ce flux magnétique peut également se diriger vers d'autres seconds pôles nord de cette culasse.

Ensuite, avant chaque second pôle nord de chaque culasse, ce flux magnétique se regroupe en provenance principalement et de façon équivalente de deux seconds pôles sud de cette culasse.

Dans le cas de la seconde géométrie de culasse, une première dent d'un flanc extrême, correspondant à un second pôle sud, est située en face d'un première dent de l'autre flanc extrême de cette culasse, correspondant à un second pôle nord, c'est-à-dire qu'elle se situe proche d'un seul second pôle nord, deux autres seconds pôles nord étant alors à égale distance de ce second pôle sud, mais plus éloignés.

Ainsi, le flux magnétique circulant dans la machine électrique a tendance, après ce second pôle sud de la culasse, à se diriger principalement vers ce second pôle nord le plus proche. Cependant, ce flux magnétique peut également se diviser et une partie de ce flux magnétique peut se diriger vers d'autres seconds pôles nord de cette culasse, notamment les deux seconds pôles nord encadrant le second nord situé en face du second pôle sud d'où provient le flux magnétique.

Ensuite, avant chaque second pôle nord, ce flux magnétique se regroupe principalement en provenance de ce second pôle sud le plus proche de ce second pôle nord et éventuellement en provenance de deux autres seconds pôles sud de cette culasse encadrant ce second pôle sud.

Enfin, dans les autres géométries de culasse intermédiaires à ces deux géométries particulières, une première dent d'un flanc extrême d'une culasse, correspondant à un second pôle sud, est toujours plus proche d'une seule première dent de l'autre flanc extrême, correspondant à un second pôle nord, une autre première dent, correspondant à un autre second pôle nord, pouvant être à une distance légèrement plus importante.

De fait, le flux magnétique circulant dans la machine électrique a tendance, après ce second pôle sud de la culasse à se diriger principalement vers ce second pôle nord le plus proche. Cependant, ce flux magnétique peut également se diviser et une partie plus ou moins importante de ce flux magnétique peut se diriger vers un ou plusieurs autres seconds pôles nord de cette culasse.

Ensuite, en arrivant à chaque second pôle nord, ce flux magnétique se regroupe en provenance principalement de ce second pôle sud le plus proche de ce second pôle nord et éventuellement en provenance d'un ou plusieurs autres seconds pôles sud de cette culasse.

Au niveau du rotor, le flux magnétique circule sur une même rangée d'aimants, sans échange direct avec d'autres rangées. De fait, quelle que soit la géométrie des culasses et le nombre de rangs de pièces intermédiaires, les aimants étant répartis de manière régulière angulairement autour de l'axe de rotation du rotor, le flux magnétiquement circule de manière identique dans le rotor. Ainsi, après avoir traversé un premier aimant du rotor en provenance du stator, le flux magnétique se divise principalement et de manière équivalente entre deux aimants de la même rangée, situés de part et d'autre de ce premier aimant. Cependant, une petite partie de ce flux magnétique peut également se diriger vers d'autres aimants de cette rangée du rotor.

Il est cependant possible qu'une partie du flux magnétique passe directement d'une rangée à l'autre. Pour éviter ce phénomène, il faut isoler magnétiquement chaque rangée d'aimants des autres rangées d'une série, par exemple en utilisant un matériau amagnétique positionné entre chaque rangée d'aimants d'une série.

Ensuite, avant de traverser un entrefer en direction du stator, ce flux magnétique se regroupe en arrivant à chaque aimant d'une rangée en provenance principalement et de façon équivalente de deux aimants de cette rangée.

Par ailleurs, la présence d'au moins un rang de pièces intermédiaires permet à ce flux magnétique de circuler d'une part à travers un premier entrefer en faisant au moins un aller-retour entre l'unité excitatrice et une série d'aimants de l'unité réceptrice, et plus précisément entre les premiers pôles et les seconds pôles, avant de continuer par l'intermédiaire d'une culasse vers une autre face du bobinage, puis à travers un autre entrefer effectuant de nouveau au moins un aller-retour entre l'unité excitatrice et une autre série d'aimants de l'unité réceptrice.

De plus, chaque culasse, dont les premières dents sont réparties sur au moins deux faces du bobinage d'une unité excitatrice permettent au flux magnétique de circuler d'une face du bobinage à une autre face de ce bobinage, c'est-à-dire d'au moins un second pôle sud vers au moins un second pôle nord d'une culasse, et par suite, d'une série d'aimants d'une unité réceptrice vers une autre série d'aimants de cette même unité réceptrice. De fait, on peut considérer que ce flux magnétique, circulant sur au moins deux faces du bobinage de chaque unité excitatrice, a un cheminement en trois dimensions. On peut donc parler de « flux magnétique 3D » circulant dans la machine électrique selon l'invention.

Avantageusement, utiliser des pièces intermédiaires et répartir les premières dents de chaque culasse et les secondes dents de ces pièces intermédiaires sur au moins deux faces du bobinage de chaque unité excitatrice permet d'augmenter le nombre de seconds pôles magnétiques attachés à cette unité excitatrice tout en conservant le même bobinage et pour un même diamètre d'entrefer et un même encombrement. De même, augmenter le nombre de culasses, c'est-à-dire en utilisant au moins deux culasses, permet d'augmenter également le nombre de seconds pôles magnétiques attachés à cette unité excitatrice.

De la sorte, la machine électrique selon l'invention permet d'utiliser au mieux le champ magnétique généré au niveau de chaque unité excitatrice en multipliant le nombre de seconds pôles, et par suite d'augmenter la surface et le nombre d'entrefers, voire de l'utiliser de façon optimale par l'intermédiaire de quatre culasses positionnant alors des premières dents de ces culasses et les secondes dents des pièces intermédiaires sur les quatre faces du bobinage.

Ainsi, la multiplicité du nombre de seconds pôles magnétiques par unité excitatrice et du nombre de premiers pôles magnétiques par unité réceptrice, l'augmentation du nombre d'entrefers ainsi que la circulation d'un flux magnétique 3D ont pour conséquence d'augmenter les performances de la machine électrique selon l'invention tout en conservant un volume et une masse équivalente et sans en complexifier son pilotage.

Les performances d'une telle machine électrique, et notamment son couple, sont alors améliorées et sa puissance massique est nettement augmentée. En effet, en multipliant par deux, trois ou quatre le nombre de pôles magnétiques de chaque unité excitatrice, le couple de la machine électrique est également multiplié par deux, trois ou quatre alors que ces dimensions sont inchangées, seule sa masse subissant une légèrement augmentation due à la présence des pôles magnétiques supplémentaires. De fait, la puissance d'une telle machine électrique est notablement augmentée pour une faible augmentation de sa masse, sa puissance massique est alors nettement augmentée.

Selon un premier mode de réalisation de l'invention, chaque unité excitatrice comporte deux culasses et les deux flancs extrêmes de ces deux culasses se positionnent sur deux faces du bobinage, les pièces intermédiaires se positionnant sur ces deux faces du bobinage entre les culasses.

De plus, chaque unité réceptrice comporte deux séries d'au moins deux rangées d'aimants positionnées en vis-à-vis des deux faces du bobinage sur lesquelles sont positionnées les pièces intermédiaires. Deux entrefers sont ainsi formés entre chaque unité réceptrice et chaque unité excitatrice.

Selon ce premier mode de réalisation de l'invention, les deux culasses ont un même décalage entre chaque dent d'un flanc extrême et chaque dent de l'autre flanc extrême. Plus particulièrement, les deux culasses sont identiques lorsque les pièces intermédiaires se positionnent sur deux faces opposées du bobinage.

Selon un second mode de réalisation de l'invention, chaque unité excitatrice comporte trois culasses et les deux flancs extrêmes de ces trois culasses se positionnent sur trois faces du bobinage, les pièces intermédiaires se positionnant sur ces trois faces du bobinage entre les culasses.

De plus, chaque unité réceptrice comporte trois séries d'au moins deux rangées d'aimants positionnées en vis-à-vis des trois faces du bobinage sur lesquelles sont positionnées les pièces intermédiaires. Trois entrefers sont ainsi formés entre chaque unité réceptrice et chaque unité excitatrice.

Selon un troisième mode de réalisation de l'invention, chaque unité excitatrice comporte quatre culasses, les deux flancs extrêmes de ces quatre culasses se positionnent sur quatre faces du bobinage, les pièces intermédiaires se positionnant sur ces quatre faces du bobinage entre les culasses.

De plus, chaque unité réceptrice comporte quatre séries d'au moins deux rangées d'aimants positionnées en vis-à-vis des quatre faces du bobinage sur lesquelles sont positionnées les pièces intermédiaires. Quatre entrefers sont ainsi formés entre chaque unité réceptrice et chaque unité excitatrice.

Chaque culasse est généralement composée d'une seule pièce annulaire. Cependant, lorsque pour une culasse ne possédant pas de flanc intermédiaire les secondes dents des pièces intermédiaires sont selon le second recouvrement, la culasse peut être composée d'une pluralité de couples de premières dents, une première dent de ce couple étant située sur chaque flanc extrême. Notamment lorsqu'une culasse est selon la seconde géométrie, les deux premières dents de ce couple de premières dents sont situées face à face respectivement sur chaque flanc extrême. Ces couples de premières dents ne sont alors pas liés les uns aux autres et sont donc isolés magnétiquement les uns des autres. De même, les premières dents de la culasse situées sur un même flanc extrême sont également isolées les unes des autres. Dans ce cas, le flux magnétique 3D circule uniquement à travers ce couple de premières dents, d'une première dent d'un flanc extrême vers la première dent de l'autre flanc extrême. Ce flux magnétique 3D ne peut donc pas se diviser et se regrouper sur cette culasse. Par contre, ce flux magnétique 3D peut toujours se diviser et se regrouper au niveau des aimants du rotor ainsi qu'éventuellement au niveau d'une ou plusieurs culasses comportant au moins un flanc intermédiaire.

Les aimants de chaque unité réceptrice sont de préférence des aimants permanents. En effet, ils ne nécessitent aucune alimentation et ont une puissance massique importante. Cependant, les aimants de chaque unité réceptrice peuvent être des aimants non permanents. Par exemple, ils peuvent être constitués par un bobinage alimenté en courant continu ou bien un bobinage en court circuit.

Une machine électrique selon l'invention peut alors constituer, notamment en fonction de ce choix pour les aimants de chaque unité réceptrice, une machine électrique synchrone ou asynchrone.

Par ailleurs, les deux flancs extrêmes de chaque culasse ainsi que les pièces intermédiaires peuvent être positionnés perpendiculairement par rapport à l'axe de rotation de la machine électrique selon l'invention, coopérant alors avec des aimants axiaux afin de créer un flux magnétique axial dans les entrefers. Ces deux flancs extrêmes et les pièces intermédiaires peuvent également être positionnés parallèlement à cet axe de rotation, coopérant alors avec des aimants radiaux afin de créer un flux magnétique 3D radial dans les entrefers.

Une culasse peut également avoir un flanc extrême positionné perpendiculairement par rapport à l'axe de rotation de la machine électrique et un flanc extrême positionné parallèlement à cet axe de rotation coopérant respectivement avec des aimants axiaux et radiaux, le flux magnétique 3D circulant alors dans les entrefers de façon multi-entrefer c'est-à-dire à la fois de façon axiale et de façon radiale.

De fait, lorsque qu'une unité excitatrice comporte au moins trois culasses, le flux magnétique 3D circule de façon multi-entrefer dans la machine électrique selon l'invention.

Par contre, lorsque qu'une unité excitatrice comporte uniquement deux culasses, le flux magnétique 3D peut circuler de façon axiale, radiale ou multi-entrefer. En effet, si les deux flancs extrêmes de chaque culasse et les pièces intermédiaires sont sur deux faces opposées du bobinage de l'unité excitatrice, le flux magnétique 3D circule de façon axiale ou bien radiale, selon que ces faces sont perpendiculaires ou parallèles à l'axe de rotation. Par contre, si les deux flancs extrêmes de chaque culasse et les pièces intermédiaires sont sur deux faces adjacentes du bobinage de l'unité excitatrice, le flux magnétique 3D circule alors de façon multi-entrefer dans la machine électrique.

Ce choix entre un flux magnétique axial, radial ou multi-entrefer impacte les dimensions de la machine électrique et peut donc être retenu, entre autres, en fonction de critères dimensionnels de la machine électrique. Ce choix peut également impacter l'inertie du rotor et, par suite, les vitesses de rotation de la machine électrique.

Afin d'améliorer les performances de la machine électrique selon l'invention et notamment son couple, il est possible d'associer plusieurs unités excitatrices sur le stator, le rotor comportant alors une association équivalente d'unités réceptrices afin qu'une unité réceptrice du rotor coopère avec une seule unité excitatrice du stator.

Les unités excitatrices peuvent être associées de façon axiale par rapport à l'axe de rotation de la machine électrique de sorte que les unités excitatrices forment une ligne parallèle à cet axe de rotation. De même, les unités excitatrices peuvent être associées de façon radiale par rapport à l'axe de rotation de la machine électrique de sorte que les unités excitatrices forment une ligne perpendiculaire à cet axe de rotation. Enfin, il est possible de combiner ces deux possibilités d'association et d'avoir par exemple des sous-ensembles d'unités excitatrices associées de façon axiale et de combiner ces sous-ensembles de façon radiale.

De plus, on peut associer des unités excitatrices identiques, c'est-à-dire comportant le même nombre de culasses, mais on peut également associer des unités excitatrices différentes, c'est-à-dire comportant des nombres de culasses différents, l'important étant qu'une unité excitatrice coopère avec une unité réceptrice dont le nombre de série d'aimants corresponde au nombre de culasses de cette unité excitatrice.

Par contre, il est possible que des fuites magnétiques se produisent entre chaque couple d'unité excitatrice et d'unité réceptrice. Ces fuites magnétiques entraînent alors une baisse des performances de la machine électrique, notamment son couple.

Afin d'éviter ces fuites magnétiques, il faut isoler magnétiquement, par l'intermédiaire d'un matériau amagnétique par exemple, chaque couple d'unité excitatrice et d'unité réceptrice. En effet, l'utilisation d'un matériau amagnétique séparant chaque unité excitatrice ou bien chaque unité réceptrice suffit à isoler les flux magnétiques de chaque couple d'unité excitatrice et d'unité réceptrice et de limiter le risque de fuites magnétiques.

De plus, afin de réduire les dimensions d'une telle machine électrique ainsi que son nombre de composants, il est possible d'associer plusieurs unités excitatrices en séparant chaque unité excitatrice uniquement par une culasse. Cette culasse est alors utilisée conjointement par deux unités excitatrices. Cependant, cette architecture de machine électrique est possible uniquement selon le premier recouvrement des dents sur chaque face du bobinage, l'extrémité de chaque dent ne dépassant pas la face du bobinage. Dans ce cas, les unités réceptrices peuvent être isolées magnétiquement afin d'éviter notamment les fuites magnétiques et permettre une circulation en boucle d'un flux magnétique entre une unité excitatrice et une unité réceptrice. Par suite, les fuites magnétiques étant limitées, la puissance massique de la machine électrique est optimisée.

Par contre, le second recouvrement des dents sur les faces du bobinage rend impossible une telle architecture sans la présence de fuites magnétiques importantes et rédhibitoires entre les couples d'unité excitatrice et d'unité réceptrice.

L'ensemble des unités excitatrices d'une telle machine électrique peut être alimenté par un même courant électrique monophasé, en mode de fonctionnement moteur.

De même, en mode de fonctionnement génératrice, une telle machine électrique fournit alors un courant électrique monophasé.

Il est également possible d'alimenter une ou plusieurs de ces unités excitatrices par différentes phases d'un courant électrique polyphasé équilibré. Dans ce cas, chaque phase du courant électrique polyphasé équilibré étant décalée par rapport aux autres phases de ce courant, un décalage doit également exister au sein de la machine électrique selon l'invention entre les différentes unités réceptrices. Ce décalage entre les unités réceptrices est, de façon connue, fonction du décalage entre les phases du courant électrique polyphasé équilibré et du nombre de pôles magnétiques de chaque unité réceptrice.

De même, en mode de fonctionnement génératrice, une telle machine électrique fournit alors un courant électrique polyphasé équilibré.

Afin d'optimiser les performances de la machine électrique selon l'invention, il est important de faciliter la circulation du flux magnétique 3D, aussi bien lorsqu'il traverse chaque entrefer que lors de sa circulation dans le rotor et le stator.

En effet, la forme de chaque culasse est importante aussi bien au niveau des premières dents que de la liaison entre les premières dents ainsi que de la forme des secondes dents des pièces intermédiaires. Tout d'abord, les premières dents, peuvent être selon diverses formes telles qu'un triangle, un trapèze ou un rectangle. La forme optimum, qui permet d'une part une bonne magnétisation des premières dents par l'unité excitatrice afin de former les seconds pôles magnétiques et d'autre part un bon transfert du flux magnétique 3D à travers l'entrefer vers les premiers pôles du rotor, est « une vaque » qui correspond en fait à une sinusoïde régulière. Cependant, cette forme est difficile à mettre en forme, notamment selon un mode de fabrication généralement utilisé pour ce type de pièces des machines électriques, tel que le compactage de poudre d'acier. En effet les crêtes des vagues manquent alors d'homogénéité et leur efficacité se trouve réduite.

De préférence, les premières dents auront des formes de « langue de chat » ou bien d'« escalier » qui permettent d'avoir un bon compromis entre l'efficacité de ces formes et leur fabrication, notamment par compactage de poudre d'acier.

De même, les secondes dents des pièces intermédiaires peuvent être selon ces mêmes formes de triangle, de trapèze ou de rectangle. De préférence, les secondes dents auront une forme de « langue de chat » ou bien d'« escalier », bien que la forme optimum soit « une vague ».

Ensuite, afin de permettre une bonne circulation du flux magnétique 3D dans chaque culasse, il est important de ne pas avoir de zone de saturation de ce flux magnétique 3D, notamment au pied de chaque première dent. Dans ce but, il est possible d'ajouter un congé de raccordement au pied des premières dents, au niveau de la jonction du flanc extrême et du flanc suivant de cette culasse, ou bien de modifier les sections de la culasse dans cette zone. De préférence, un raccordement par un chanfrein est réalisé au niveau du pied de chaque première dent.

Par ailleurs, la structure du rotor est réalisée en un matériau ferromagnétique principalement dans les zones où se trouvent les rangées d'aimants, afin de permettre la circulation du flux magnétique entre chaque aimant de ces rangées. De fait, les parties de cette structure où ne se trouvent pas de rangées d'aimants peuvent être réalisées en un matériau amagnétique.

De plus, certaines parties de cette structure peuvent permettre d'isoler magnétiquement d'une part chaque série d'aimants d'une unité réceptrice vis à vis des série d'aimants de cette unité réceptrice et d'autre part chaque unité réceptrice vis à vis des autres unités réceptrices de la machine électrique. Une telle isolation magnétique peut être réalisée par un matériau amagnétique, par exemple.

Avantageusement, les matériaux amagnétiques ont généralement une masse volumique plus faible que les matériaux ferromagnétiques. De fait, l'utilisation d'un matériau amagnétique permet de réduire d'une part la masse du rotor de la machine électrique et, par suite, son inertie, contribuant ainsi à améliorer les performances de la machine électrique selon l'invention.

L'invention et ses avantages apparaîtront avec plus de détails dans le cadre de la description qui suit avec des exemples de réalisation donnés à titre illustratif en référence aux figures annexées qui représentent :
- la figure 1, un premier mode de réalisation de la machine électrique selon l'invention,
- la figure 2, les culasses et l'implantation des pièces intermédiaires de ce premier mode de réalisation,
- les figures 3 et 4, les formes possibles des culasses,
- la figure 5, les formes possibles des pièces intermédiaires,
- les figures 6 à 10, des variantes de ce premier mode de réalisation,
- la figure 11, un second mode de réalisation de la machine électrique selon l'invention,
- la figure 12, les culasses et l'implantation des pièces intermédiaires de ce second mode de réalisation,
- les figures 13 et 14, deux variantes de ce second mode de réalisation,
- la figure 15, un troisième mode de réalisation de la machine électrique selon l'invention, et
- la figure 16, les culasses et l'implantation des pièces intermédiaires de ce troisième mode de réalisation.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite axiale. Le terme « axial » est relatif à toute direction parallèle à la première direction X.

Les directions Y et Z sont dites radiales. Le terme « radial » est relatif à toute direction perpendiculaire à la direction axiale X.

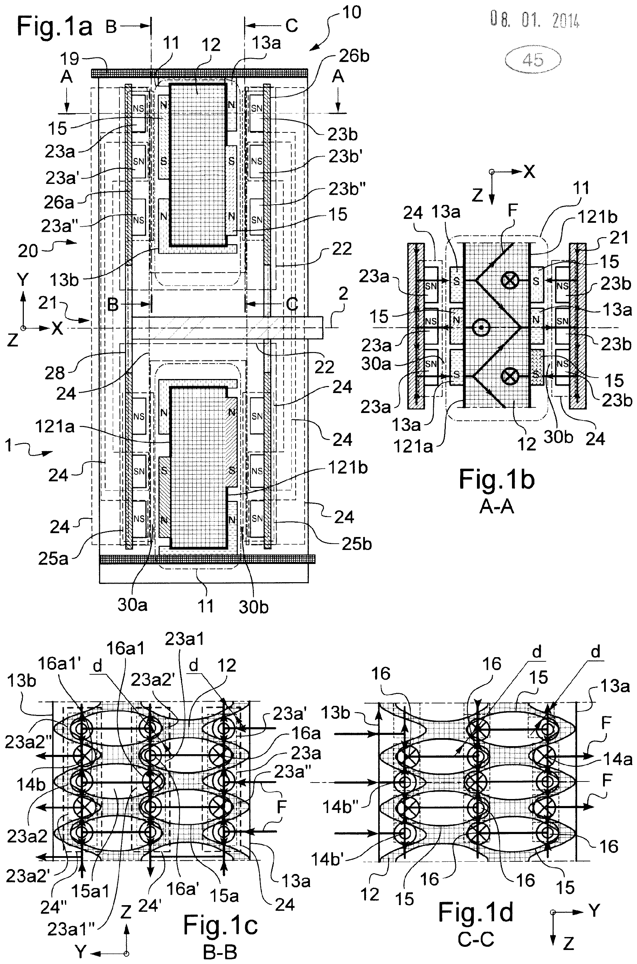

La figure 1 représente un premier mode de réalisation d'une machine électrique 1 relevant de l'invention. Selon la figure 1a, une telle machine électrique 1 comporte un axe de rotation 2, un stator 10 et un rotor 20 tournant autour de l'axe de rotation 2 et à l'intérieur du stator 10.

Le rotor 20 comporte une structure 21 et une unité réceptrice 22 annulaire munie de deux séries 25a,25b d'aimants 23, chaque série 25a,25b comportant trois rangées 24 d'aimants 23 et chaque aimant 23 ayant un premier pôle nord et un premier pôle sud. Chaque rangée 24 est ainsi constituée d'une alternance des premiers pôles nord et des premiers pôles sud, les aimants 23 des rangées 24 étant positionnés afin que deux aimants 23 adjacents soient de polarités opposées.

Cette structure 21 de ce rotor 20 comporte deux premières parties 26a,26b sur lesquelles sont respectivement positionnées, deux séries 25a,25b d'aimants 23 et une seconde partie 28 permettant de fixer ces deux premières parties 26a,26b.

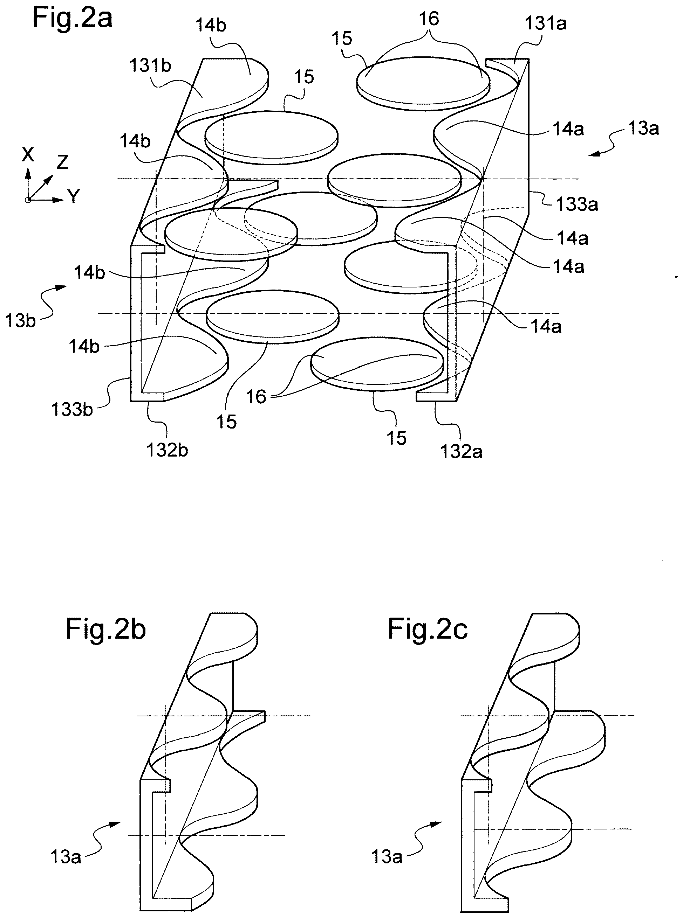

Le stator 10 comporte une armature 19 et une unité excitatrice 11 annulaire munie d'un bobinage 12, de deux culasses 13a,13b annulaires et identiques ainsi que d'une pluralité de pièces intermédiaires 15. Une portion de ces culasses 13 est représentée sur la figure 2a ainsi que l'implantation de ces pièces intermédiaires 15. Chaque culasse 13 comporte trois flancs dont deux flancs extrêmes 131,132 et un flanc intermédiaire 133, chaque flanc extrême 131,132 comportant une pluralité de premières dents 14 réparties angulairement de façon régulière autour de l'axe de rotation 2. Chaque pièce intermédiaire 15 comporte deux extrémités formant deux secondes dents 16. Le bobinage 12 est positionné à l'intérieur des deux culasses 13a,13b et des pièces intermédiaires 15 afin de former l'unité excitatrice 11.

L'armature 19 du stator 10 ainsi que la seconde partie 28 de la structure 21 du rotor 20 sont réalisées en un matériau amagnétique. Par exemple, elles peuvent être fabriquées en aluminium. Les culasses 13 et les pièces intermédiaires 15 ainsi que les premières parties 26a,26b de la structure 21 sont réalisées en un matériau ferromagnétique, un alliage magnétique doux pressé et cuit et/ou usiné (Soft Magnetic Compound) par exemple. Les culasses 13 et les pièces intermédiaires 15 peuvent être maintenues autour du bobinage 12 par un matériau non métallique et amagnétique, par exemple par un enrobage solide de fibres de carbone. Les deux premières parties 26a,26b de la structure 21 sont isolées magnétiquement l'une de l'autre par la seconde partie 28 de cette structure 21. L'utilisation de la seconde partie 28 de la structure 21 constituée d'un matériau amagnétique permet notamment de réduire la masse du rotor 20 et, par suite, son inertie.

Les premières dents 14 des deux culasses 13 sont positionnées sur deux faces 121a, 121b du bobinage 12 et les pièces intermédiaires 15 sont positionnées sur deux rangs annulaires sur ces deux faces 121a, 121b entre les premières dents 14 des deux culasses 13a,13b, comme représenté sur les figures 1c et 1d. Ces deux figures représentent les deux sections B-B et C-C selon respectivement les deux faces 121a, 121b.

Une première extrémité de chaque pièce intermédiaire 15 s'emboîte entre deux premières dents 14 d'une culasse 13 en maintenant une distance d entre la seconde dent 16 formée par cette première extrémité de chaque pièce intermédiaire 15 et deux premières dents 14. De même, une seconde extrémité de chaque pièce intermédiaire 15 d'un rang s'emboîte entre deux secondes extrémités de chaque pièce intermédiaire 15 d'un autre rang en maintenant une distance d entre les secondes dents 16 formées par ces secondes extrémités.

Par ailleurs, chaque première dent 14 d'un flanc extrême 131 d'une culasse 13 est située entre deux premières dents 14 de l'autre flanc extrême 132 de cette culasse 13, selon une première géométrie de la culasse 13. Les deux flancs extrêmes 131,132 ont par exemple des formes équivalentes à deux signaux en opposition de phase, comme représenté sur la figure 2b.

Cependant, ces premières dents 14 peuvent être réparties différemment entre les deux flancs extrêmes 131,132, mais ces premières dents 14 doivent toujours avoir la même répartition angulaire autour de l'axe de rotation 2 du rotor 20 sur chaque flanc extrême 131,132 de chaque culasse 13, ainsi qu'une même forme et les mêmes dimensions.

Par exemple, chaque première dent 14 d'un flanc extrême 131 d'une culasse 13 est située face à une première dent 14 de l'autre flanc extrême 132 de cette culasse 13 selon une seconde géométrie de la culasse 13. Les deux flancs extrêmes 131,132 ont par exemple des formes équivalentes à deux signaux en phase, comme représenté sur la figure 2c.

Les premières dents 14 d'un flanc extrême 131 d'une culasse 13 peuvent également prendre toutes les positions intermédiaires entre une position face à une première dent 14 de l'autre flanc extrême 132 et une position entre deux premières dents 14 de l'autre flanc extrême 132.

De plus, les premières dents 14a,14b de chaque culasse 13a,13b et les secondes dents 16 de chaque pièce intermédiaire 15 peuvent recouvrir de façon plus ou moins importante chaque face 121a, 121b du bobinage 12.

Selon un premier recouvrement correspondant au recouvrement utilisé sur la machine électrique 1 de la figure 1, l'extrémité de chaque seconde dent 16 du premier et du dernier rang des pièces intermédiaires 15 ne dépasse pas la face 121a, 121b du bobinage 12 sur laquelle se trouvent ces pièces intermédiaires 15, c'est à dire que ces secondes dents 16 s'arrêtent avant la culasse 13a,13b avec laquelle elles s'emboîtent. De plus, chaque flanc intermédiaire 133a,133b de la culasse 13 dépasse de la face 121a, 121b du bobinage 12 sur laquelle il se trouve. Les culasses 13a,13b et les pièces intermédiaires 15 réalisant ce premier recouvrement sont représentées sur les figures 1 et 2.

Cependant, selon un second recouvrement, l'extrémité de chaque seconde dent 16 du premier et du dernier rang des pièces intermédiaires 15 peut dépasser la face 121a, 121b du bobinage 12 sur laquelle se trouvent ces pièces intermédiaires 15, c'est à dire que ces secondes dents 16 vont jusqu'à la face extérieure de la culasse 13a,13b avec laquelle elles s'emboîtent. Dans ce cas, chaque flanc intermédiaire 133a,133b de la culasse ne dépasse pas de la face 121a, 121b du bobinage 12 sur laquelle il se trouve.

De plus, l'unité excitatrice 11 comportant un nombre pair de pièces intermédiaires 15, les premières dents 14 de deux culasses 13 sont tête-bêche sur une même face du bobinage 12.

Le nombre de pièces intermédiaires 15 représentées sur les figures n'est pas limitatif et une unité excitatrice 11 selon l'invention peut comporter au moins un rang de pièces intermédiaires 15.

Ainsi, lorsqu'une unité excitatrice 11 comporte un nombre impair de rangs de pièces intermédiaires 15, les premières dents 14 de deux culasses 13 sont alors face à face sur une même face du bobinage 12.

L'unité réceptrice 22 coopère avec l'unité excitatrice 11 et chaque série 25a,25b d'aimants 23 est située en vis-à-vis de l'unité excitatrice 11 de telle façon que chaque aimant 23 a un premier pôle situé face à une des faces 121a, 121b sur laquelle sont positionnées les pièces intermédiaires 15 et l'autre premier pôle situé face à une première partie 26a,26b de la structure 21 du rotor 20. Ainsi, les premiers pôles magnétiques coopèrent avec les seconds pôles magnétiques et deux entrefers 30a,30b sont alors formés entre l'unité réceptrice 22 et l'unité excitatrice 11, plus précisément entre chaque série 25a,25b d'aimants 23 et chaque face 121a, 121b.

De plus, le nombre total des aimants 23 est égal au nombre total des premières dents 14 et des secondes dents 16.

De fait, lorsque le bobinage 12 est traversé par un courant électrique alternatif, dans le cas d'un fonctionnement en mode moteur, chaque première dent 14 et chaque seconde dent 16 sont magnétisées, formant alternativement des seconds pôles nord et des seconds pôles sud sur chaque face 121a, 121b.

Par suite, un flux magnétique F circule dans la machine électrique 1 comme représenté sur les figures 1b, 1c et 1d. Ce flux magnétique F circule ainsi d'un premier pôle nord du rotor 20 vers un second pôle sud du stator 10, puis d'un second pôle nord du stator 10 vers un premier pôle sud du rotor 20, réalisant ainsi plusieurs allers-retours entre l'unité excitatrice 11 et l'unité réceptrice 22.

De plus, le flux magnétique F peut se diviser dans chaque culasse 13a,13b après un second pôle sud en se dirigeant vers au moins deux seconds pôles nord et se regrouper avant un second pôle nord de cette culasse 13a,13b en provenance d'au moins deux seconds pôles sud de cette culasse 13a,13b.

De même, le flux magnétique F peut, dans le rotor 20, se diviser après chaque aimant 23 de ce rotor 20 vers au moins deux autres aimants 23 de ce rotor 20 et se regrouper avant chaque aimant 23 du rotor 20 en provenance d'au moins deux aimants 23 de ce rotor 20.

Plus précisément, selon la figure 1c, le flux magnétique F circule tout d'abord sur la face 121a du bobinage 12. Ce flux magnétique F quitte une première dent 14a d'une première culasse 13a, constituant un second pôle nord, vers un premier pôle sud d'un premier aimant 23a d'une première rangée 24. Après avoir traversé cet aimant 23a, le flux magnétique F peut alors se diviser dans la structure 25a du rotor 10 et se diriger de façon équivalente vers deux aimants 23a',23a" de cette première rangée 24. Avant chacun de ces aimants 23a',23a", le flux magnétique F se regroupe alors en provenance de deux aimants 23 de cette première rangée 24 avant de circuler dans chaque aimant 23a',23a", puis traverse l'entrefer 30a.

Ce flux magnétique F arrive alors sur une seconde dent 16a d'une première pièce intermédiaire 15a constituant un second pôle sud, cette première pièce intermédiaire 15a appartenant à un premier rang de pièces intermédiaires 15. Ensuite, ce flux magnétique F circule vers la seconde dent 16a' de cette première pièce intermédiaire 15a constituant un second pôle nord et traverse l'entrefer 30a vers le premier pôle sud d'un second aimant 23a1 d'une seconde rangée 24'. Après cet aimant 23a1, le flux magnétique F se divise de nouveau dans la structure 25a et se dirige de façon équivalente vers deux aimants 23a1',23a1" de cette seconde rangée 24'. Avant chacun de ces aimants 23a1',23a1", le flux magnétique F se regroupe en provenance de deux aimants 23 de cette seconde rangée 24' avant de circuler dans chaque aimant 23a1',23a1", puis traverse de nouveau l'entrefer 30a.

Ce flux magnétique F arrive alors sur une seconde dent 16a1 d'une seconde pièce intermédiaire 15a1 constituant un second pôle sud, cette seconde pièce intermédiaire 15a1 appartenant à un second d'un rang de pièces intermédiaires 15. Ensuite, ce flux magnétique F circule vers la seconde dent 16a1' de cette seconde pièce intermédiaire 15a1 constituant un second pôle nord et traverse l'entrefer 30a vers le premier pôle sud d'un troisième aimant 23a2 d'une troisième rangée 24". Après cet aimant 23a2, le flux magnétique F1 se diviser dans la structure 25a du rotor 10 et se diriger de façon équivalente vers deux aimants 23a2',23a2" de cette troisième rangée 24". Avant chacun de ces aimants 23a'2,23a2", le flux magnétique F se regroupe alors en provenance de deux aimants 23 de cette troisième rangée 24" avant de circuler dans chaque aimant 23a,23a", puis traverse l'entrefer 30a.

Le flux magnétique F atteint alors une première dent 14b de la seconde culasse 13b de la face 121a du bobinage 12 constituant un second pôle nord et circule donc vers une autre face 121b du bobinage 12, en se divisant, comme représenté sur la figure 1b. Le flux magnétique F se dirige alors de façon équivalente vers deux premières dents 14b',14b" de cette seconde culasse 13b, puis avant chacune de ces premières dents 14b',14b", le flux magnétique F se regroupe alors en provenance de deux premières dents 14b de cette seconde culasse 13b et traverse ensuite l'entrefer 30a.

Enfin, le flux magnétique F1 recommence un tel cycle de circulation sur la face 121b jusqu'à la culasse 13a suivante selon la figure 1d.

De même, en fonctionnement en mode génératrice, la rotation du rotor 20 provoque la magnétisation des premières dents 14 des culasses 13 et des secondes dents 16 des pièces intermédiaires 15, et par suite la circulation d'un flux magnétique F. Un courant électrique alternatif apparaît alors dans l'unité excitatrice 11.

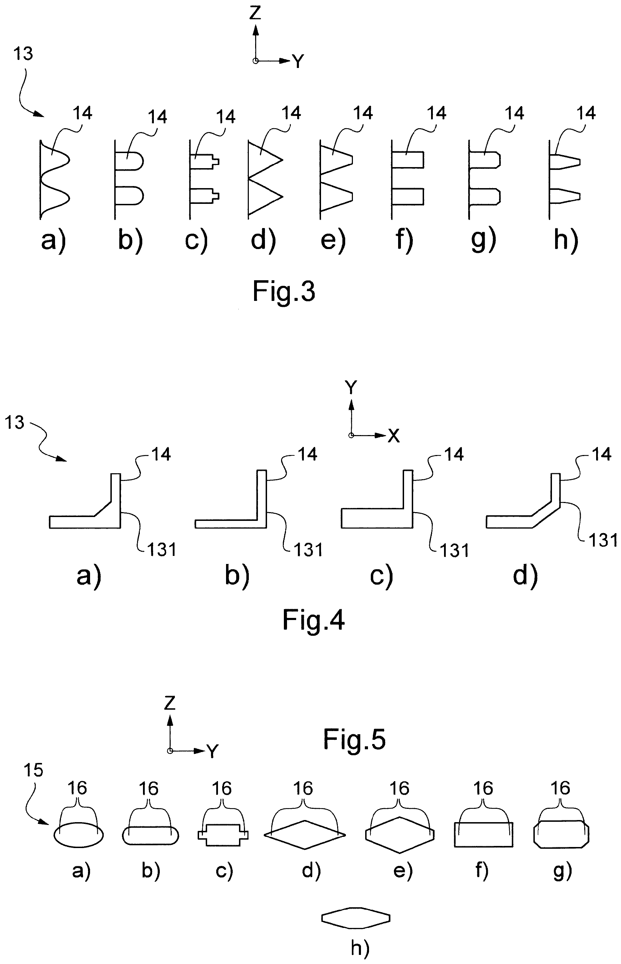

Afin de permettre une bonne circulation de ce flux magnétique F, les premières dents 14 et les secondes dents 16 peuvent avoir différentes formes comprenant soit des arêtes vives, soit des rayons de courbure. Des exemples de ces formes des premières dents 14 et des secondes dents 16 sont représentés respectivement sur les figures 3 et 5, la forme optimum de ces premières dents 14 et les secondes dents 16 est « une vaque » qui correspond en fait à une sinusoïde régulière selon les figures 3a et 5a, mais elle est difficile à réaliser industriellement. De préférence, les première et secondes dents 14,16 auront des formes de « langue de chat » ou bien d'« escaliers », selon respectivement les figures 3b,3c et 5b,5c qui permettent d'avoir un bon compromis entre l'efficacité de ces formes et leur fabrication, notamment par compactage de poudre d'acier.

De plus, afin de permettre une bonne circulation de ce flux magnétique F dans le stator 10, et plus particulièrement dans chaque culasse 13, la section de la culasse 13 au niveau du pied de chaque première dent 14 est à définir avec attention entre chaque flanc extrême 131,132 et le flanc intermédiaire 133. En effet, une forme non adaptée peut entraîner une saturation de ce flux magnétique F dans la culasse 13, et par suite une perte de performance de la machine électrique 1. Des exemples de ces sections de la culasse 13 sont représentés sur la figure 4, la section préférentielle de la culasse 13 étant un raccordement par un chanfrein selon la figure 4a.

Sur la machine électrique 1 représentée sur la figure 1a, les aimants 23 sont axiaux, c'est-à-dire que les deux pôles de chaque aimant 23 sont orientés parallèlement à l'axe de rotation 2, les premières dents 14 et les secondes dents 16 étant positionnées perpendiculairement à l'axe de rotation 2 de la machine électrique 1. Par suite, les deux entrefers 30a,30b sont perpendiculaires à cet axe de rotation 2. De fait, le flux magnétique F est axial, c'est-à-dire qu'il circule axialement, c'est-à-dire parallèlement à cet axe de rotation 2. La machine électrique 1 représentée sur la figure 1a est donc une machine électrique à flux magnétique 3D axial.

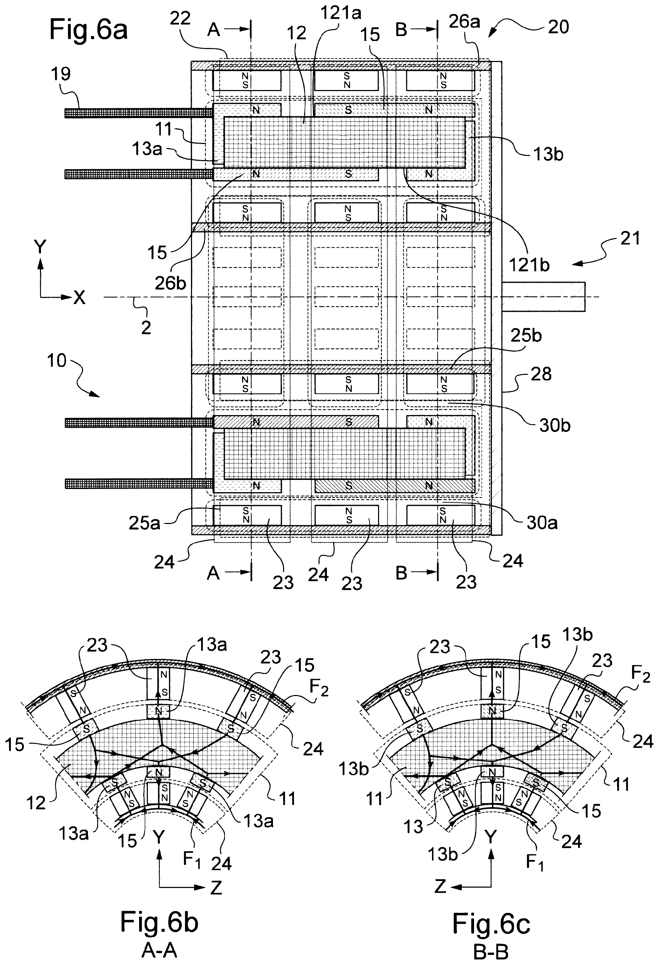

La figure 6 représente une variante du premier mode de réalisation de l'invention. Selon la figure 6a, une telle machine électrique 1 comporte comme précédemment un axe de rotation 2, un stator 10 et un rotor 20 tournant autour de l'axe de rotation 2, à l'intérieur et à l'extérieur du stator 10.

Le rotor 20 comporte une structure 21 et une unité réceptrice 22 annulaire munie de deux séries 25a,25b de trois rangées 24 d'aimants 23, une première série 25a étant positionnée à l'extérieur du stator 10 et de l'unité excitatrice 11 et une seconde série 25b étant positionnée à l'intérieur du stator 10 et de l'unité excitatrice 11. Cette structure 21 de ce rotor 20 comporte deux premières parties 26a,26b sur lesquelles sont respectivement positionnées les deux séries 25a,25b d'aimants 23 et une seconde partie 28 permettant de fixer ces deux premières parties 26a,26b.

Le stator 10 comporte une armature 19 et une unité excitatrice 11 annulaire munie d'un bobinage 12, de deux culasses 13a,13b annulaires et de pièces intermédiaires 15. Les deux faces 121a,121b du bobinage 12 sur lesquelles les premières dents 14 des deux culasses 13 et les secondes dents 16 des pièces intermédiaires 15 sont positionnées sont parallèles à l'axe de rotation 2.

De plus, les culasses 13a,13b sont selon la première géométrie, chaque dent 14 d'un flanc extrême 131 d'une culasse 13 étant située entre deux dents 14 de l'autre flanc extrême 132 de cette culasse 13 et selon le second recouvrement, c'est-à-dire que l'extrémité de chaque seconde dent 16 du second rang de pièces intermédiaires 15 dépasse la face 121a,121b du bobinage 12.

Dans cette variante, les aimants 23 sont radiaux, c'est-à-dire que les deux pôles de chaque aimant 23 sont orientés perpendiculairement à l'axe de rotation 2 de la machine électrique 1. Par suite, les deux entrefers 30a,30b sont parallèles à cet axe de rotation 2. De fait, le flux magnétique F circule radialement, c'est-à-dire perpendiculairement à cet axe de rotation 2. La machine électrique 1 représentée sur la figure 6a est donc une machine électrique à flux magnétique 3D radial.

Le flux magnétique F circule dans la machine électrique 1 comme représenté les figures 6b et 6c, et de la même façon qu'énoncée précédemment.

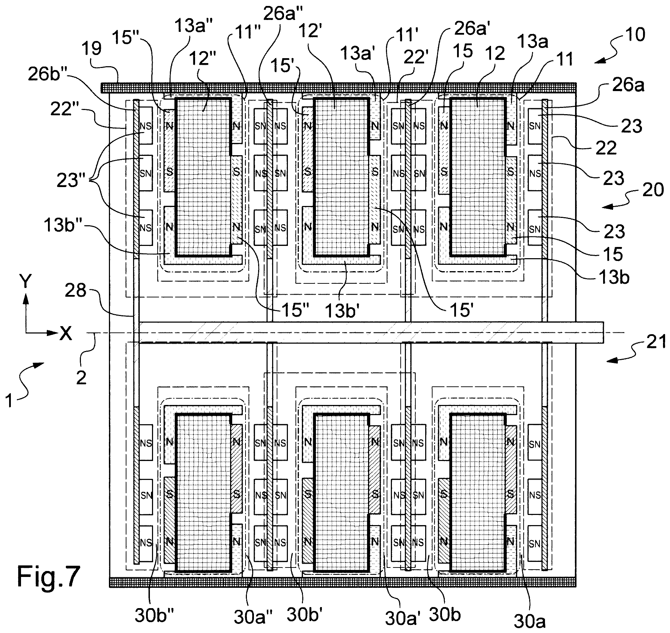

Sur les figures 7 à 10 sont représentées d'autres variantes du premier mode de réalisation de l'invention comportant plusieurs unités excitatrices 11 et plusieurs unités réceptrices 22 permettant ainsi d'augmenter les performances de la machine électrique 1, notamment son couple.

La figure 7 représente une machine électrique 1 à flux magnétique 3D axial comportant trois unités excitatrices 11,11',11" et trois unités réceptrices 22,22',22". Cette variante est en fait constituée par trois machines électriques à flux magnétique 3D axial représentées sur la figure 1a qui ont été associées pour former une seule et même machine électrique 1. Cette association est faite de façon axiale, les trois unités excitatrices 11,11',11" formant une ligne parallèle à l'axe de rotation 2. Le rotor 20 est, dans cette variante, interne au stator 10, de façon que le rotor 20 tourne à l'intérieur du stator 10, mais ce rotor 20 pourrait également être externe par rapport au stator 10.

Les trois unités excitatrices 11,11',11" sont séparées les unes des autres par l'armature 19 et fonctionnent indépendamment les unes des autres, un flux magnétique 3D axial circulant simultanément dans chaque sous-ensemble constitué d'une unité excitatrice 11,11 ',11 " et d'une unité réceptrice 22,22',22".

De plus, aucun décalage angulaire autour de l'axe de rotation 2 n'existe entre chaque unité excitatrice 11,11',11", chaque unité excitatrice 11,11',11" étant alimentée par un courant électrique alternatif monophasé en mode de fonctionnement moteur. Cependant, les trois unités excitatrices 11,11',11" pourraient par exemple être alimentées par trois phases d'un courant électrique alternatif triphasé équilibré, si un décalage angulaire entre chaque unité excitatrice 11,11',11" autour de l'axe de rotation 2 était réalisé.

De même, en fonctionnement en mode génératrice, la rotation du rotor 20 provoque l'apparition, pour une telle machine électrique 1, d'un même courant électrique alternatif monophasé dans chaque unité excitatrice 11,11',11". Par contre, si un décalage angulaire existe entre chaque unité excitatrice 11,11',11" autour de l'axe de rotation 2, un courant électrique alternatif triphasé équilibré apparait dans chaque unité excitatrice 11,11 ',11 ".

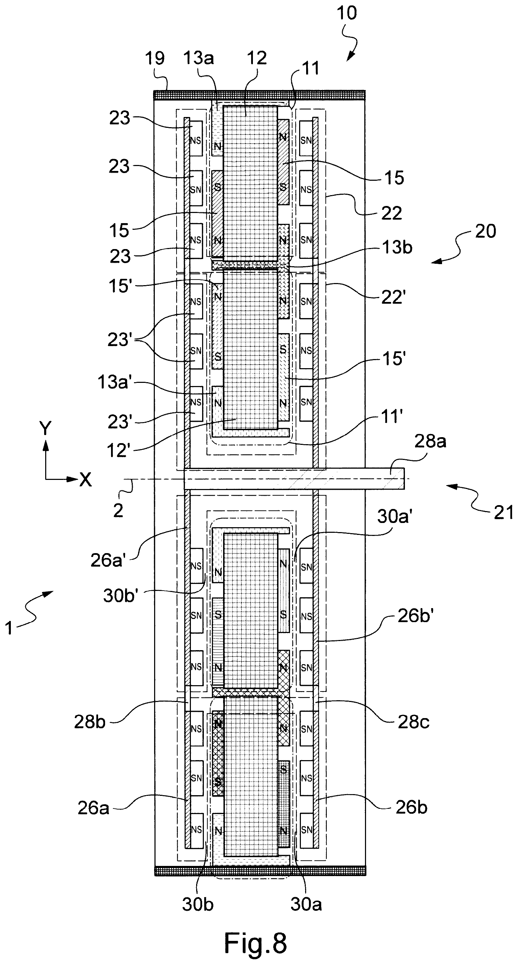

La figure 8 représente une machine électrique 1 à flux magnétique 3D axial comportant deux unités excitatrices 11,11' et deux unités réceptrices 22,22', associées de façon radiale, les deux unités excitatrices 11,11' formant une ligne perpendiculaire à l'axe de rotation 2, le rotor 20 étant interne au stator 10.

Afin de limiter les dimensions d'une telle machine électrique 1 ainsi que son nombre de composants, les unités excitatrices 11,11' sont séparées uniquement par une culasse 13b qui est utilisée conjointement par ces deux unités excitatrices 11,11'.

Les culasses 13 et les pièces intermédiaires 15 sont alors selon le premier recouvrement, l'extrémité de chaque seconde dent 16 ne dépassant pas la face 121 des bobinages 12,12'. En effet, le second recouvrement des dents 14 sur les faces 121 du bobinage 12 rend impossible une telle architecture de machine électrique 1 sans une présence importante de fuites magnétiques importantes et rédhibitoires entre les couples d'unité excitatrice 11,11' et d'unité réceptrice 22,22'.

Les deux unités excitatrices 11,11' fonctionnent également indépendamment les unes des autres, un flux magnétique 3D axial circulant simultanément dans chaque sous-ensemble constitué d'une unité excitatrice 11,11' et d'une unité réceptrice 22,22'.

Cependant, pour garantir cette indépendance, il est préférable d'isoler magnétiquement chaque unité réceptrice 22,22'. En effet, contrairement à la machine électrique 1 représenté sur la figure 7, les unités excitatrices 11,11' sont séparées par la culasse 13b, qui est en matériau ferromagnétique. De fait, afin d'éviter notamment les fuites magnétiques entre les unités excitatrices 11,11' et les unités réceptrices 22,22', la structure 21 du rotor 20 comporte des secondes parties 28b,28c en un matériau amagnétique isolant les premières parties 26a,26'a,26b,26'b entre chaque série d'aimant 23. De fait, les deux unités réceptrices 22,22' sont isolées magnétiquement.

Dans la machine électrique 1 représentée sur cette figure 8, aucun décalage angulaire n'existe entre chaque unité excitatrice 11,11', qui sont alimentées par un courant électrique alternatif monophasé en mode de fonctionnement moteur. Par contre, les deux unités excitatrices 11,11' sont alimentées par deux courants monophasés inversés. En effet, un flux magnétique de chaque unité excitatrice 11 et 11' traverse la même culasse 13b. De plus, un flux magnétique tourne naturellement autour du courant selon un sens prédéterminé par le sens de ce courant. De fait, en inversant les deux courant circulant dans deux unités excitatrices 11,11' adjacentes, les deux flux magnétiques traversant la même culasse 13b s'écarte l'un de l'autre dans cette culasse 13a, garantissant leur cheminement vers l'unité réceptrice 22,22' correspondante, les deux flux magnétiques restant ainsi indépendants.

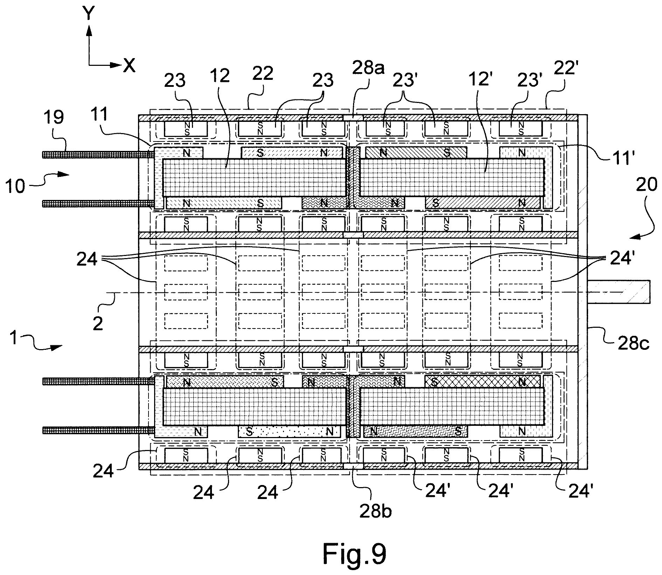

La figure 9 représente une machine électrique 1 à flux magnétique 3D radial comportant deux unités excitatrices 11,11' et deux unités réceptrices 22,22',. Cette association est faite de façon axiale, les deux unités excitatrices 11,11' formant une ligne parallèle à l'axe de rotation 2.

Comme pour la variante de la figure 8, deux unités excitatrices 11,11' adjacentes sont séparées par une culasse qui est utilisée conjointement par ces deux unités excitatrices 11,11', afin de réduire l'encombrement d'une telle machine électrique 1. Un flux magnétique 3D radial circule alors simultanément dans chaque sous-ensemble constitué d'une unité excitatrice 11,11' et d'une unité réceptrice 12,12', les unités excitatrices 11,11' étant alimentée par deux courants électriques alternatifs monophasés inversés.

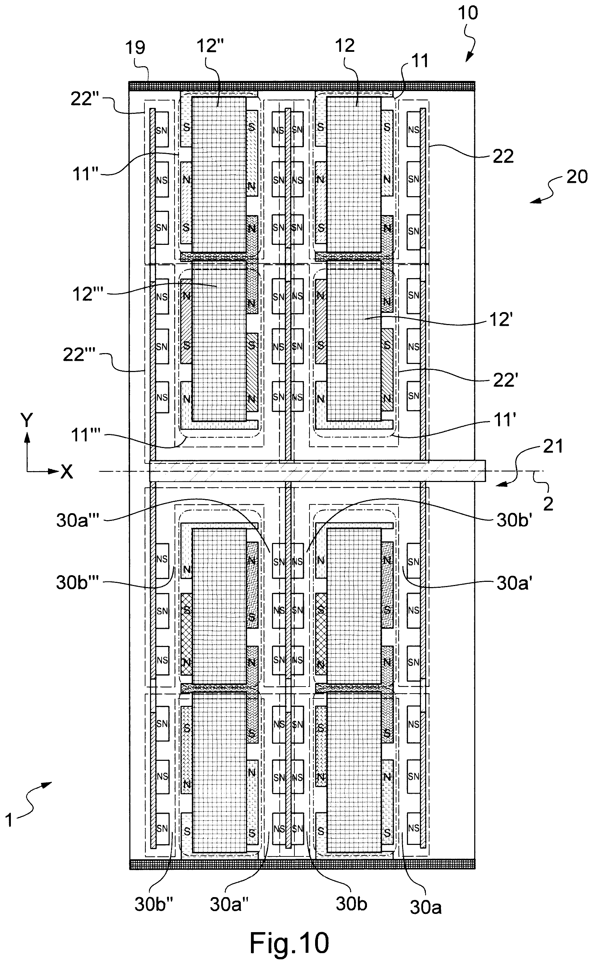

La figure 10 représente une association à la fois radiale et axiale de quatre unités excitatrices et quatre unités réceptrices. En effet cette machine électrique 1 comporte deux sous-ensembles constitués par la variante de la figure 8, c'est-à-dire deux unités excitatrices et deux unités réceptrices associées de façon radiale, ces deux sous-ensembles étant eux-mêmes combinés de façon axiale.

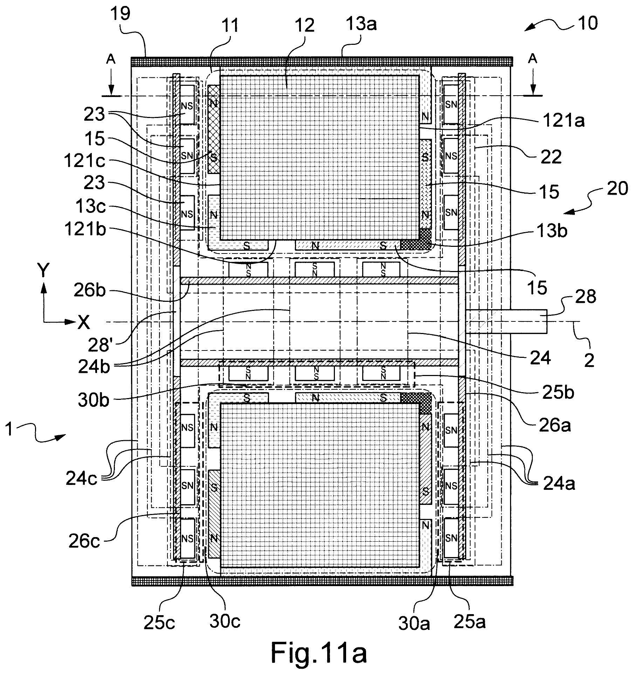

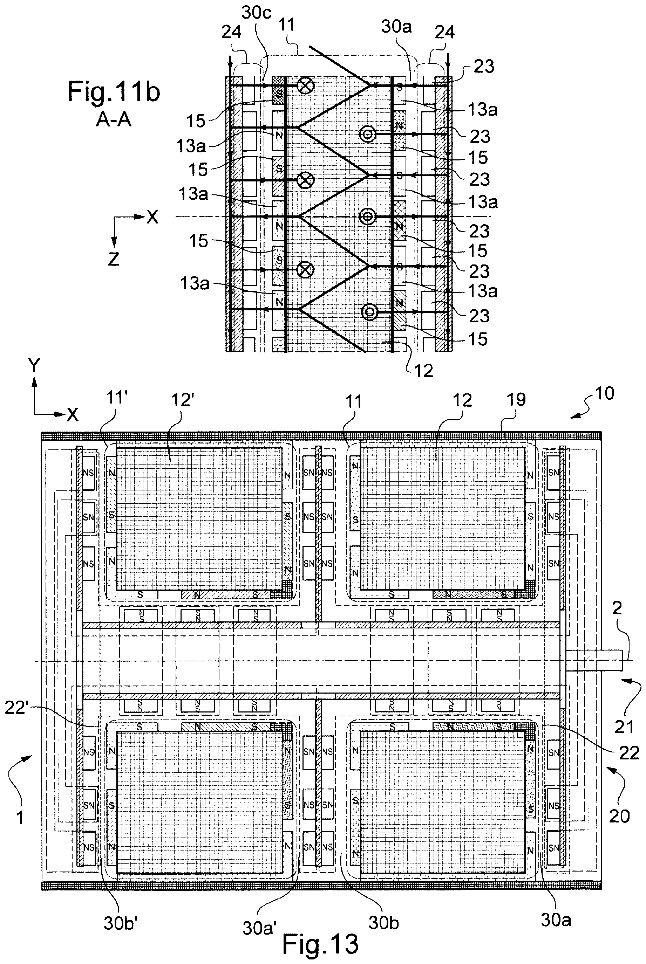

La figure 11 représente un second mode de réalisation d'une machine électrique 1 relevant de l'invention. Selon la figure 11a, une telle machine électrique 1 comporte un axe de rotation 2, un stator 10 et un rotor 20 tournant autour de l'axe de rotation 2 et à l'intérieur du stator 10.

Le rotor 20 comporte une structure 21 et une unité réceptrice 22 annulaire munie de trois séries 25a,25b,25c d'aimants 23, chaque série 25a,25b,25c comportant trois rangées 24 d'aimants 23 et chaque aimant 23 ayant un premier pôle nord et un premier pôle sud. Chaque rangée 24 est ainsi constituée d'une alternance des premiers pôles nord et des premiers pôles sud, les aimants 23 de ces rangées 24 étant positionnés afin que deux aimants 23 adjacents soient de polarités opposées.

Cette structure 21 de ce rotor 20 comporte trois premières parties 26a,26b,26c, en un matériau ferromagnétique, sur lesquelles sont respectivement positionnées trois séries 25a,25b,25c d'aimants 23 et une seconde partie 28,28' permettant de fixer ces trois premières parties 26a,26b,26c tout en assurant une isolation magnétique entre elles, cette seconde partie 25a,25b étant en un matériau amagnétique.

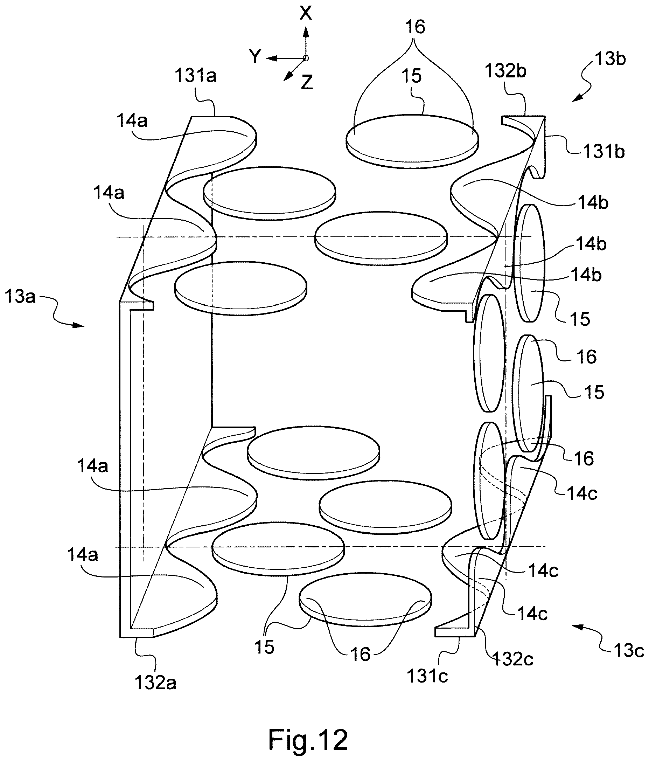

Le stator 10 comporte une armature 19 et une unité excitatrice 11 annulaire munie d'un bobinage 12, de trois culasses 13a,13b,13c annulaires et d'une pluralité de pièces intermédiaires 15. Une portion de ces culasses 13 est représentée sur la figure 12 ainsi que l'implantation de ces pièces intermédiaires 15. Une culasse 13a comporte trois flancs dont deux flancs extrêmes 131a,132a et un flanc intermédiaire 133a, et deux culasses 13b,13c comportent deux flancs extrêmes respectivement 131b,132b et 131c,132c. Chaque flanc extrême 131,132 comporte une pluralité de premières dents 14 réparties angulairement de façon régulière autour de l'axe de rotation 2. Chaque pièce intermédiaire 15 comporte deux extrémités formant deux secondes dents 16. Le bobinage 12 est positionné à l'intérieur des trois culasses 13a,13b,13c et des pièces intermédiaires 15 afin de former l'unité excitatrice 11.

Les premières dents 14 des trois culasses 13 sont positionnées sur trois faces 121a,121b,121c du bobinage 12 et les pièces intermédiaires 15 sont positionnées sur deux rangs annulaires sur ces trois faces 121a,121b,121c comme représenté sur la figure 12. Ces pièces intermédiaires 15 sont positionnées, comme pour le premier mode de réalisation représenté sur les figures 1 et 2, sur les trois faces 121a,121b,121c entre les premières dents 14 de deux culasses 13.

L'unité réceptrice 22 coopère avec l'unité excitatrice 11 et chaque série 25a,25b,25c d'aimants 23 est située en vis-à-vis de l'unité excitatrice 11 de telle façon que chaque aimant 23 a un premier pôle situé face d'une des faces 121a,121b,121c sur laquelle sont positionnées les pièces intermédiaires 15 et l'autre premier pôle situé face à une première partie 26a,26b de la structure 21 du rotor 20. Ainsi, les premiers pôles magnétiques coopèrent avec les seconds pôles magnétiques et trois entrefers 30a,30b,30c sont alors formés entre l'unité réceptrice 22 et l'unité excitatrice 11, plus précisément entre chaque série 25a,25b,25c d'aimants 23 et chaque face 121a,121b,121c.

De plus, le nombre total des aimants 23 est égal au nombre total des premières dents 14 et des secondes dents 16.

De fait, lorsque le bobinage 12 est traversé par un courant électrique alternatif, dans le cas d'un fonctionnement en mode moteur, chaque première dent 14 et chaque seconde dent 16 sont magnétisées, formant alternativement des seconds pôles nord et des seconds pôles sud sur chaque face 121a,121b,121c.

Par suite, un flux magnétique F circule dans la machine électrique 1 comme représenté sur la figure 11b. Ce flux magnétique F circule ainsi d'un premier pôle nord du rotor 20 vers un second pôle sud du stator 10, puis d'un second pôle nord du stator 10 vers un premier pôle sud du rotor 20, réalisant de manière analogue au premier mode de réalisation plusieurs allers-retours entre l'unité excitatrice 11 et l'unité réceptrice 22, mais cette fois sur trois faces 121a,121b,121c du bobinage 12.

De plus, ce flux magnétique F se divise et se regroupe comme pour le premier mode de réalisation de l'invention au niveau de chaque culasse 13 du stator 10 et de chaque aimant 23 du rotor 20.

Sur la machine électrique 1 représentée sur la figure 11a, deux entrefers 30a,30c sont perpendiculaires à l'axe de rotation 2 et un entrefer 30b est parallèle à cet axe de rotation 2. De fait, le flux magnétique F circule à la fois axialement et radialement. La machine électrique 1 représentée sur la figure 11a est donc une machine électrique à flux magnétique 3D multi-entrefer.

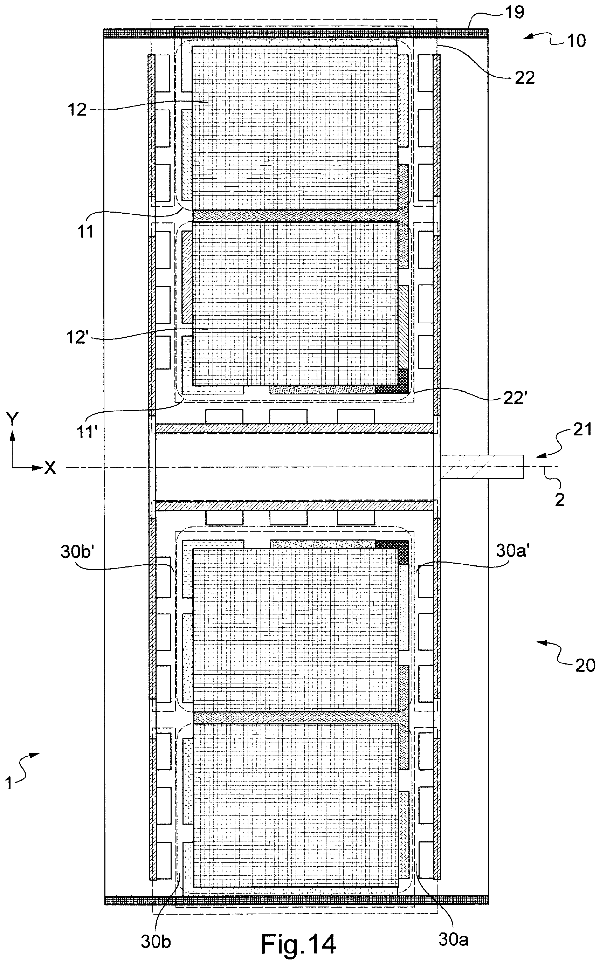

Sur les figures 13 et 14 sont représentées deux variantes du second mode de réalisation de l'invention comportant deux unités excitatrices 11,11' et deux unités réceptrices 22,22', permettant ainsi d'augmenter les performances de la machine électrique 1, notamment son couple.

La figure 13 représente une machine électrique 1 à flux magnétique 3D multi-entrefer dont les deux unités excitatrices 11,11' et les deux unités réceptrices 22,22' ont été associées de façon axiale, les deux unités excitatrices 11,11' formant une ligne parallèle à l'axe de rotation 2.

De plus, aucun décalage angulaire n'existant entre chaque unité excitatrice 11,11' autour de l'axe de rotation 2, les unités excitatrices 11,11' sont, alimentées par un courant électrique alternatif monophasé en mode de fonctionnement moteur et un flux magnétique 3D circule simultanément dans chaque sous-ensemble constitué d'une unité excitatrice 11,11' et d'une unité réceptrice 22,22'.

La figure 14 représente une machine électrique 1 à flux magnétique 3D multi-entrefer constituée par deux unités excitatrices 11,11' et deux unités réceptrices 22,22' associées de façon radiale, le rotor 20 tournant à l'intérieur du stator 10.

Comme précédemment et afin de limiter les dimensions d'une telle machine électrique 1, une culasse assure la séparation entre deux unités excitatrices et est utilisée conjointement par ces deux unités excitatrices et deux courants électriques alternatifs monophasés inversés alimentent les deux unités excitatrices 11,11'.

De plus, la machine électrique 1 représentée sur la figure 14 comporte une unité excitatrice 11 selon le premier mode de réalisation, c'est-à-dire munie de deux culasses et une unité excitatrice 11' selon le second mode de réalisation, c'est-à-dire munie de trois culasses.

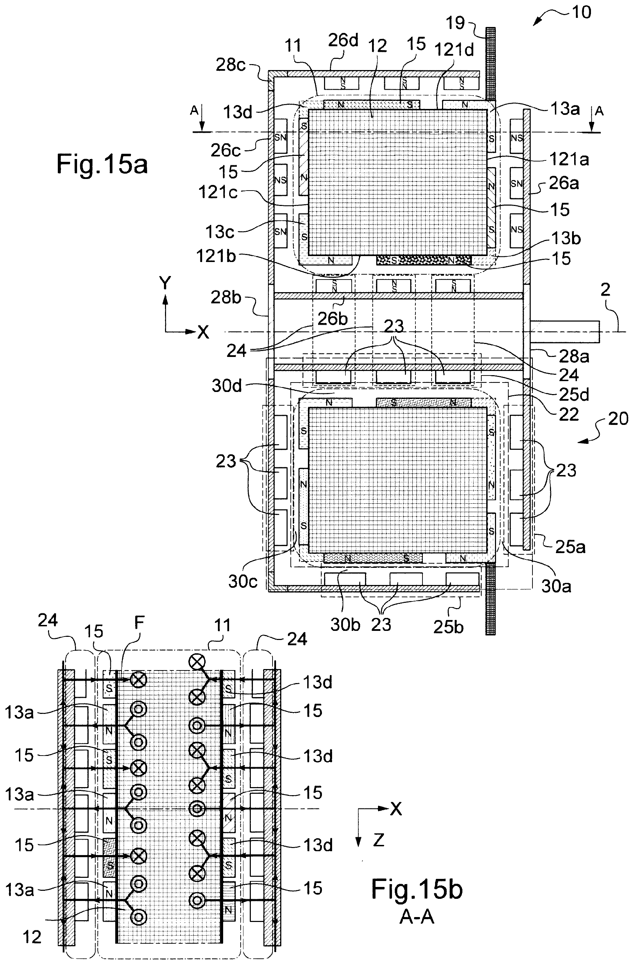

La figure 15 représente un troisième mode de réalisation d'une machine électrique 1 relevant de l'invention. Selon la figure 15a, une telle machine électrique 1 comporte un axe de rotation 2, un stator 10 et un rotor 20 tournant autour de l'axe de rotation 2 et à l'intérieur du stator 10.

Le rotor 20 comporte une structure 21 et une unité réceptrice 22 annulaire munie de quatre séries 25a,25b,25c,25d d'aimants 23, chaque série 25a,25b,25c,25d comportant trois rangées 24 d'aimants 23, et chaque aimant 23 ayant un premier pôle nord et un premier pôle sud. Chaque rangée 24 est ainsi constituée d'une alternance des premiers pôles nord et des premiers pôles sud, les aimants 23 de ces rangées 24 étant positionnés afin que deux aimants 23 adjacents soient de polarités opposées.

Cette structure 21 de ce rotor 20 comporte quatre premières parties 26a,26b,26c,26d sur lesquelles sont respectivement positionnées les quatre rangées 24 d'aimants 23 et trois secondes parties 28a,28b,28c permettant de fixer ces quatre premières parties 26a,26b,26c,26d tout en assurant une isolation magnétique entre elles, ces secondes parties 28a,28b,28c étant en un matériau amagnétique.

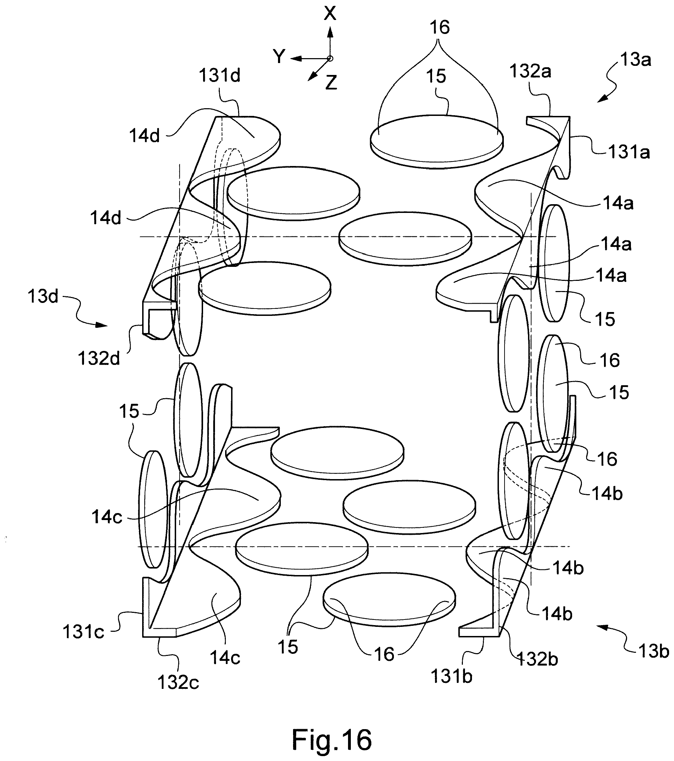

Le stator 10 comporte une armature 19 et une unité excitatrice 11 annulaire munie d'un bobinage 12, de quatre culasses 13a,13b,13c,13d annulaires et d'une pluralité de pièces intermédiaires 15. Une portion de ces culasses 13 est représentée sur la figure 16 ainsi que l'implantation de ces pièces intermédiaires 15. Chaque culasse 13a,13b,13c,13d comporte deux flancs extrêmes 131,132 comportant une pluralité de premières dents 14 réparties angulairement de façon régulière autour de l'axe de rotation 2. Chaque pièce intermédiaire 15 comporte deux extrémités formant deux secondes dents 16. Le bobinage 12 est positionné à l'intérieur des quatre culasses 13a,13b,13c,13d et des pièces intermédiaires 15 afin de former l'unité excitatrice 11.

Les premières dents 14 des quatre culasses 13 sont positionnées sur quatre faces 121a, 121b, 121c, 121d du bobinage 12 et les pièces intermédiaires 15 sont positionnées sur deux rangs annulaires sur ces quatre faces 121a, 121b, 121c, 121d, comme représenté sur la figure 16. Ces pièces intermédiaires 15 sont positionnées, comme pour les modes de réalisation précédemment représentés, sur les quatre faces 121a, 121b, 121c, 121d entre les premières dents 14 de deux culasses 13.

L'unité réceptrice 22 coopère avec l'unité excitatrice 11 et, chaque série 25a,25b,25c,25d d'aimants 23 étant située en vis-à-vis de l'unité excitatrice 11 de telle façon que chaque aimant 23 a un premier pôle situé face d'une des faces 121a, 121b, 121c, 121d sur laquelle sont positionnées les pièces intermédiaires 15 et l'autre premier pôle situé face à une première partie 26a,26b de la structure 21 du rotor 20. Ainsi, les premiers pôles magnétiques coopèrent avec les seconds pôles magnétiques et quatre entrefers 30a,30b,30c,30d sont alors formés entre l'unité réceptrice 22 et l'unité excitatrice 11, plus précisément entre chaque série 25a,25b,25c,25d d'aimants 23 et chaque face 121a, 121b, 121c, 121d.

De plus, le nombre total des aimants 23 est égal au nombre total des premières dents 14 et des secondes dents 16.

De fait, lorsque le bobinage 12 est traversé par un courant électrique alternatif, dans le cas d'un fonctionnement en mode moteur, chaque première dent 14 et chaque seconde dent 16 sont magnétisées formant alternativement des seconds pôles nord et des seconds pôles sud sur chaque face 121a, 121b, 121c, 121d.

Par suite, un flux magnétique F circule dans la machine électrique 1 comme représenté sur la figure 15b. Ce flux magnétique F circule ainsi d'un premier pôle nord du rotor 20 vers un second pôle sud du stator 10, puis d'un second pôle nord du stator 10 vers un premier pôle sud du rotor 20, réalisant de manière analogue aux modes de réalisation précédents de l'invention, plusieurs allers-retours entre l'unité excitatrice 11 et l'unité réceptrice 22, mais cette fois sur quatre faces 121a, 121b, 121c, 121d du bobinage 12.

De plus, ce flux magnétique F se divise et se regroupe comme pour les modes de réalisation précédents de l'invention au niveau de chaque culasse 13 du stator 10 et de chaque aimant 24 du rotor 20.

Sur la machine électrique 1 représentée sur la figure 15a, deux entrefers 30a,30c sont perpendiculaires à l'axe de rotation 2 et deux entrefers 30b,30d sont parallèles à cet axe de rotation 2. De fait, le flux magnétique F circule à la fois axialement et radialement. La machine électrique 1 représentée sur la figure 15a est donc une machine électrique à flux magnétique 3D multi-entrefer.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention définie dans les revendications.

Par exemple, l'ensemble des figures décrivent des machines électriques 1, qui utilisent uniquement deux rangs de pièces intermédiaires 16 et trois rangées 24 d'aimants 23. Cependant, ce nombre de rang de pièces intermédiaires 15 peut être différent, tant que ce nombre est supérieur ou égal à une unité et que le nombre de rangées 24 d'aimants 23 est égale à ce nombre de rang de pièces intermédiaires 16 plus une unité.

## Revendications

1. Machine électrique (1) à plusieurs entrefers (30) et flux magnétique 3D comportant :
- un axe de rotation (2),
- un stator (10) muni d'une armature (19) et d'au moins une unité excitatrice (11) annulaire comportant un bobinage (12), au moins deux culasses (13a,13b) annulaires et une pluralité de pièces intermédiaires (15), ledit bobinage (12) étant positionné à l'intérieur desdites culasses (13) et disposant d'au moins deux faces (121), lesdites culasses (13a,13b) comportant une pluralité de premières dents (14), et chaque pièce intermédiaire (15) comportant deux extrémités formant deux secondes dents (16),
- un rotor (20) tournant autour dudit axe de rotation (2) et muni d'une structure (21) et d'au moins une unité réceptrice (22) annulaire, chaque unité réceptrice (22) comportant une pluralité d'aimants (23) et coopérant avec une seule unité excitatrice (11), chaque aimant (23) ayant un premier pôle nord et un premier pôle sud, un desdits premier pôles étant situé en vis-à-vis de ladite unité excitatrice (11) et l'autre premier pôle étant situé face à ladite structure (21) dudit rotor (20), le nombre total des aimants (23) étant égal au nombre total desdites premières et secondes dents (14,16),
**caractérisée en ce que**, chaque culasse (13) comportant au moins deux flancs dont deux flancs extrêmes (131,132), lesdites premières dents (14) de chaque culasse (13) sont réparties sur lesdits deux flancs extrêmes (131,132) et de façon régulière angulairement autour dudit axe de rotation (2) sur chaque flanc extrême (131,132) et lesdites pièces intermédiaires (15) sont positionnées sur au moins un rang annulaire sur au moins deux desdites faces (121) entre lesdites premières dents (14) de deux culasses (13) de façon à ce qu'une première extrémité de chaque pièce intermédiaire (15) d'un premier rang s'emboîte entre deux premières dents (14) d'une culasse (13) en maintenant une distance (d) entre ladite seconde dent (16) formée par chaque première extrémité et deux premières dents (14) de ladite culasse (14), qu'une seconde extrémité de chaque pièce intermédiaire (15) d'un rang s'emboîte entre deux premières extrémités de deux pièces intermédiaires (15) du rang suivant en maintenant ladite distance (d) entre lesdites secondes dents (16) formées d'une part par lesdites secondes extrémités de chaque pièce intermédiaire (15) d'un rang et d'autre part par les première extrémités (18) de chaque pièce intermédiaire (15) du rang suivant et qu'une seconde extrémité de chaque pièce intermédiaire (15) d'un dernier rang s'emboîte entre deux premières dents (14) de ladite autre culasse (13) de ladite face (121) en maintenant une distance (d) entre ladite seconde dent (16) formée par chaque seconde extrémité et lesdites deux premières dents (14) de ladite autre culasse (13), chaque première et seconde dent (14,16) formant alternativement des seconds pôles nord et des seconds pôles sud, chaque pièce intermédiaire (15) comportant un pôle nord et un pôle sud, chaque unité réceptrice (22) comportant au moins deux séries (25) d'aimants (23), chaque série (25) étant constituée d'au moins deux rangées (24) d'aimants (23) de telle sorte que deux premiers pôles adjacents soient de polarités opposées, lesdits aimants (23) étant répartis angulairement de façon régulière autour dudit axe de rotation (2) sur chaque rangée (24), chaque série (25) étant située en vis-à-vis d'une desdites faces (121) sur laquelle sont positionnées lesdites pièces intermédiaires (15), un desdits entrefers (30) étant ainsi formé entre chaque série (25) d'aimants (23) et ladite unité excitatrice (11), un flux magnétique (F) circulant alors en trois dimensions dans ladite machine électrique (1) et pouvant se diviser et se regrouper au niveau desdits aimants (23) dudit rotor (20) et pouvant se diviser et se regrouper au niveau desdites culasses (13) dudit stator (10).

2. Machine électrique (1) à plusieurs entrefers (30) et flux magnétique 3D selon la revendication 1,
**caractérisée en ce que** lesdits aimants (23) sont des aimants permanents.

3. Machine électrique (1) à plusieurs entrefers (30) et flux magnétique 3D selon la revendication 1,
**caractérisée en ce que** lesdits aimants (23) sont des aimants non permanents.

4. Machine électrique (1) à plusieurs entrefers (30) et flux magnétique 3D selon l'une quelconque des revendications 1 à 3,
**caractérisée en ce qu'**au moins un flanc extrême (131,132) d'au moins deux culasses (13) est positionné perpendiculairement audit axe de rotation (2) afin que ledit flux magnétique (F) circule au moins de façon axiale dans ladite machine électrique (1).

5. Machine électrique (1) à plusieurs entrefers (30) et flux magnétique 3D selon l'une quelconque des revendications 1 à 4,
**caractérisée en ce qu'**au moins un flanc extrême (131,132) d'au moins deux culasses (13) est positionné parallèlement audit axe de rotation (2) afin que ledit flux magnétique (F) circule au moins de façon radiale dans ladite machine électrique (1).

6. Machine électrique (1) à plusieurs entrefers (30) et flux magnétique 3D selon l'une quelconque des revendications 1 à 5,
**caractérisée en ce que** chaque première et seconde dent (14,16) est en forme de « langue de chat ».

7. Machine électrique (1) à plusieurs entrefers (30) et flux magnétique 3D selon l'une quelconque des revendications 1 à 5,
**caractérisée en ce que** chaque première et seconde dent (14,16) est en forme d'« escalier ».

8. Machine électrique (1) à plusieurs entrefers (30) et flux magnétique 3D selon l'une quelconque des revendications 1 à 7,
**caractérisée en ce que** chaque culasse (13) comporte un raccordement en forme de chanfrein au pied de chaque première dent (14).

9. Machine électrique (1) à plusieurs entrefers (30) et flux magnétique 3D selon l'une quelconque des revendications 1 à 8,
**caractérisée en ce qu'**au moins une unité excitatrice (11) comporte deux culasses (13a,13b) et coopère avec une unité réceptrice (22) comportant deux séries (25a,25b) d'aimants (23), deux entrefers (30a,30b) étant alors constitués entre ladite unité excitatrice (11) et ladite unité réceptrice (22).

10. Machine électrique (1) à plusieurs entrefers (30) et flux magnétique 3D selon l'une quelconque des revendications 1 à 9,
**caractérisée en ce qu'**au moins une unité excitatrice (11) comporte trois culasses (13a,13b,13c) et coopère avec une unité réceptrice (22) comportant trois séries (25a,25b,25c) d'aimants (23), trois entrefers (30a,30b,30c) étant alors constitués entre ladite unité excitatrice (11) et ladite unité réceptrice (22).

11. Machine électrique (1) à plusieurs entrefers (30) et flux magnétique 3D selon l'une quelconque des revendications 1 à 10,
**caractérisée en ce qu'**au moins une unité excitatrice (11) comporte quatre culasses (13a,13b,13c,13d) et coopère avec une unité réceptrice (22) comportant quatre séries (25a,25b,25c,25d) d'aimants (23), quatre entrefers (30a,30b,30c,30d) étant alors constitués entre ladite unité excitatrice (11) et ladite unité réceptrice (22).

12. Machine électrique (1) à plusieurs entrefers (30) et flux magnétique 3D selon l'une quelconque des revendications 1 à 11,
**caractérisée en ce que** ledit stator (10) comporte au moins deux unités excitatrices (11a, 11b) réparties de façon axiale par rapport audit axe de rotation (2) et ledit rotor (20) comporte au moins deux unités réceptrices (22,22') réparties de façon axiale par rapport audit axe de rotation (2).

13. Machine électrique (1) à plusieurs entrefers (30) et flux magnétique 3D selon l'une quelconque des revendications 1 à 12,
**caractérisée en ce que** ledit stator (10) comporte au moins deux unités excitatrices (11) réparties de façon radiale par rapport audit axe de rotation (2) et ledit rotor (20) comporte au moins deux unités réceptrices (22,22') réparties de façon radiale par rapport audit axe de rotation (2).

14. Machine électrique (1) à plusieurs entrefers (30) et flux magnétique 3D selon l'une quelconque des revendications 12 à 13,
**caractérisée en ce qu'**une culasse (13) sépare deux unités excitatrices (11,11') adjacentes et est utilisée conjointement par lesdites deux unités excitatrices (11,11') adjacentes, deux flux magnétiques (F) relatifs respectivement auxdites deux unités excitatrices (11,11') adjacentes circulant dans ladite culasse (13).

15. Machine électrique (1) à plusieurs entrefers (30) et flux magnétique 3D selon l'une quelconque des revendications 12 à 14,
**caractérisée en ce qu'**au moins deux unités excitatrices (11a, 11b) sont alimentées par deux phases différentes d'un courant électrique polyphasé équilibré.

16. Machine électrique (1) à plusieurs entrefers (30) et flux magnétique 3D selon l'une quelconque des revendications 1 à 14,
**caractérisée en ce que** chaque unité excitatrice (11) est alimentée par un courant électrique monophasé.

17. Machine électrique (1) à plusieurs entrefers (30) et flux magnétique 3D selon l'une quelconque des revendications 1 à 16,
**caractérisée en ce que** lesdites premières dents (14) desdits deux flancs extrêmes (131,132) d'au moins une culasse (13) sont réparties angulairement de façon régulière autour dudit axe de rotation (2) et alternativement sur lesdits deux flancs extrêmes (131,132).

18. Machine électrique (1) à plusieurs entrefers (30) et flux magnétique 3D selon l'une quelconque des revendications 1 à 17,
**caractérisée en ce que** lesdites premières dents (14) desdits deux flancs extrêmes (131,132) d'au moins une culasse (13) sont face à face.

19. Machine électrique (1) à plusieurs entrefers (30) et flux magnétique 3D selon l'une quelconque des revendications 1 à 18,
**caractérisée en ce que** l'extrémité de chaque seconde dent (16) du premier rang et du dernier rang desdites pièces intermédiaires (15) ne dépasse pas ladite face (121) dudit bobinage (12).

20. Machine électrique (1) à plusieurs entrefers (30) et flux magnétique 3D selon l'une quelconque des revendications 1 à 18,
**caractérisée en ce que** l'extrémité de chaque seconde dent (16) du premier rang et du dernier rang desdites pièces intermédiaires (15) dépasse ladite face (121) dudit bobinage (12).

## Patentansprüche

1. Elektrische Maschine (1) mit mehreren Luftspalten (30) und 3D-Magnetfluss, umfassend:
- eine Drehachse (2),
- einen Stator (10), der mit einem Anker (19) und mindestens einer ringförmigen Erregereinheit (11) versehen ist, die eine Wicklung (12), mindestens zwei ringförmige Joche (13a, 13b) und eine Mehrzahl von Zwischenstücken (15) umfasst, wobei die Wicklung (12) innerhalb der Joche (13) angeordnet ist und mindestens zwei Seiten (121) aufweist, wobei die Joche (13a, 13b) eine Mehrzahl von ersten Zähnen (14) umfassen, und jedes Zwischenteil (15) zwei Enden umfasst, die zwei zweite Zähne (16) bilden,
- einen Rotor (20), der sich um die Drehachse (2) dreht und mit einer Struktur (21) und mindestens einer ringförmigen Empfängereinheit (22) versehen ist, wobei jede Empfängereinheit (22) eine Mehrzahl von Magneten (23) umfasst und mit einer einzigen Erregereinheit (11) zusammenwirkt, wobei jeder Magnet (23) einen ersten Nordpol und einen ersten Südpol aufweist, einer der ersten Pole gegenüber der Erregereinheit (11) angeordnet ist und der andere erste Pol gegenüber der Struktur (21) des Rotors (20) angeordnet ist, wobei die Gesamtzahl der Magnete (23) gleich der Gesamtzahl der ersten und zweiten Zähne (14, 16) ist,
**dadurch gekennzeichnet, dass**
jedes Joch (13) mindestens zwei Flanken aufweist, darunter zwei Außenflanken (131, 132), dass die ersten Zähne (14) jedes Jochs (13) über die beiden Außenflanken (131, 132) und winkelgleichmäßig um die Drehachse (2) an jeder Außenflanke (131, 132) verteilt sind, dass die Zwischenstücke (15) in mindestens einer ringförmigen Reihe auf mindestens zwei der Seiten (121) zwischen den ersten Zähnen (14) von zwei Jochen (13) so positioniert sind,
dass ein erstes Ende jedes Zwischenstücks (15) einer ersten Reihe zwischen zwei erste Zähne (14) eines Jochs (13) passt und dabei einen Abstand (d) zwischen dem durch jedes erste Ende gebildeten zweiten Zahn (16) und zwei ersten Zähnen (14) des Jochs (14) einhält,
dass ein zweites Ende jedes Zwischenstücks (15) einer Reihe zwischen zwei erste Enden von zwei Zwischenstücken (15) der nächsten Reihe passt und dabei den Abstand (d) zwischen den einerseits durch die zweiten Enden jedes Zwischenstücks (15) einer Reihe und andererseits durch die ersten Enden (18) jedes Zwischenstücks (15) der nächsten Reihe gebildeten zweiten Zähnen (16) einhält,
und dass ein zweites Ende jedes Zwischenstücks (15) einer letzten Reihe zwischen zwei erste Zähne (14) des anderen Jochs (13) der Seite (121) passt und dabei einen Abstand (d) zwischen dem durch jedes zweite Ende gebildeten zweiten Zahn (16) und den beiden ersten Zähnen (14) des anderen Jochs (13) einhält,
jeder erste und zweite Zahn (14, 16) abwechselnd zweite Nordpole und zweite Südpole bildet, wobei jedes Zwischenstück (15) einen Nordpol und einen Südpol umfasst, wobei jede Empfängereinheit (22) mindestens zwei Serien (25) von Magneten (23) umfasst, wobei jede Serie (25) aus mindestens zwei Reihen (24) von Magneten (23) besteht, so dass zwei benachbarte erste Pole von entgegengesetzter Polarität sind, wobei die Magnete (23) in jeder Reihe (24) winkelmäßig gleichmäßig um die Drehachse (2) verteilt sind, wobei jede Serie (25) gegenüber einer der Seiten (121) angeordnet ist, auf der die Zwischenstücke (15) angeordnet sind, wobei einer der Luftspalte (30) so zwischen jeder Serie (25) von Magneten (23) und der Erregereinheit (11) gebildet wird, wobei ein magnetischer Fluss (F) dann in drei Dimensionen in der elektrischen Maschine (1) zirkuliert und in der Lage ist, sich an den Magneten (23) des Rotors (20) zu teilen und zu vereinigen und sich an den Jochen (13) des Stators (10) zu teilen und zu vereinigen.

2. Elektrische Maschine (1) mit mehreren Luftspalten (30) und 3D-Magnetfluss nach Anspruch 1,
**dadurch gekennzeichnet, dass** die Magnete (23) Permanentmagnete sind.

3. Elektrische Maschine (1) mit mehreren Luftspalten (30) und 3D-Magnetfluss nach Anspruch 1,
**dadurch gekennzeichnet, dass** die Magnete (23) nichtpermanente Magnete sind.

4. Elektrische Maschine (1) mit mehreren Luftspalten (30) und 3D-Magnetfluss nach einem der Ansprüche 1 bis 3,
**dadurch gekennzeichnet, dass** mindestens eine Außenflanke (131, 132) von mindestens zwei Jochen (13) senkrecht zur Drehachse (2) angeordnet ist, so dass der Magnetfluss (F) mindestens axial in der elektrischen Maschine (1) zirkuliert.

5. Elektrische Maschine (1) mit mehreren Luftspalten (30) und 3D-Magnetfluss nach einem der Ansprüche 1 bis 4,
**dadurch gekennzeichnet, dass** mindestens eine Außenflanke (131, 132) von mindestens zwei Jochen (13) parallel zur Drehachse (2) positioniert ist, so dass der Magnetfluss (F) mindestens radial in der elektrischen Maschine (1) zirkuliert.

6. Elektrische Maschine (1) mit mehreren Luftspalten (30) und 3D-Magnetfluss nach einem der Ansprüche 1 bis 5,
**dadurch gekennzeichnet, dass** jeder erste und zweite Zahn (14, 16) die Form einer "Katzenzunge" hat.

7. Elektrische Maschine (1) mit einer Vielzahl von Luftspalten (30) und 3D-Magnetfluss nach einem der Ansprüche 1 bis 5,
**dadurch gekennzeichnet, dass** jeder erste und zweite Zahn (14, 16) die Form einer "Treppe" hat.

8. Elektrische Maschine (1) mit mehreren Luftspalten (30) und 3D-Magnetfluss nach einem der Ansprüche 1 bis 7,
**dadurch gekennzeichnet, dass** jedes Joch (13) eine fasenförmige Verbindung an der Basis jedes ersten Zahnes (14) aufweist.

9. Elektrische Maschine (1) mit mehreren Luftspalten (30) und 3D-Magnetfluss nach einem der Ansprüche 1 bis 8,
**dadurch gekennzeichnet, dass** mindestens eine Erregereinheit (11) zwei Joche (13a, 13b) aufweist und mit einer Empfängereinheit (22) zusammenwirkt, die zwei Serien (25a, 25b) von Magneten (23) aufweist, wobei dann zwei Luftspalte (30a, 30b) zwischen der Erregereinheit (11) und der Empfängereinheit (22) gebildet sind.

10. Elektrische Maschine (1) mit mehreren Luftspalten (30) und 3D-Magnetfluss nach einem der Ansprüche 1 bis 9,
**dadurch gekennzeichnet, dass** mindestens eine Erregereinheit (11) drei Joche (13a, 13b, 130) aufweist und mit einer Empfängereinheit (22) zusammenwirkt, die drei Serien (25a, 25b, 25c) von Magneten (23) aufweist, wobei dann drei Luftspalte (30a, 30b, 30c) zwischen der Erregereinheit (11) und der Empfängereinheit (22) gebildet sind.

11. Elektrische Maschine (1) mit mehreren Luftspalten (30) und 3D-Magnetfluss nach einem der Ansprüche 1 bis 10,
**dadurch gekennzeichnet, dass** mindestens eine Erregereinheit (11) vier Joche (13a, 13b, 13c, 13d) aufweist und mit einer Empfängereinheit (22) zusammenwirkt, die vier Serien (25a, 25b, 250, 25d) von Magneten (23) aufweist, wobei dann vier Luftspalte (30a, 30b, 30c, 30d) zwischen der Erregereinheit (11) und der Empfängereinheit (22) gebildet sind.

12. Elektrische Maschine (1) mit mehreren Luftspalten (30) und 3D-Magnetfluss nach einem der Ansprüche 1 bis 11,
**dadurch gekennzeichnet, dass** der Stator (10) mindestens zwei Erregereinheiten (11a, 11b) aufweist, die axial in Bezug auf die Drehachse (2) verteilt sind, und der Rotor (20) mindestens zwei Empfängereinheiten (22, 22') aufweist, die axial in Bezug auf die Drehachse (2) verteilt sind.

13. Elektrische Maschine (1) mit mehreren Luftspalten (30) und 3D-Magnetfluss nach einem der Ansprüche 1 bis 12,
**dadurch gekennzeichnet, dass** der Stator (10) mindestens zwei Erregereinheiten (11) aufweist, die radial in Bezug auf die Drehachse (2) verteilt sind, und der Rotor (20) mindestens zwei Empfängereinheiten (22, 22') aufweist, die radial in Bezug auf die Drehachse (2) verteilt sind.

14. Elektrische Maschine (1) mit mehreren Luftspalten (30) und 3D-Magnetfluss nach einem der Ansprüche 12 bis 13,
**dadurch gekennzeichnet, dass** ein Joch (13) zwei benachbarte Erregereinheiten (11, 11') trennt und gemeinsam von den beiden benachbarten Erregereinheiten (11, 11') genutzt wird, wobei jeweils zwei zu den beiden benachbarten Erregereinheiten (11, 11') gehörende Magnetflüsse (F) in dem Joch (13) zirkulieren.

15. Elektrische Maschine (1) mit mehreren Luftspalten (30) und 3D-Magnetfluss nach einem der Ansprüche 12 bis 14,
**dadurch gekennzeichnet, dass** mindestens zwei Erregereinheiten (11a, 11b) von zwei verschiedenen Phasen eines symmetrischen mehrphasigen elektrischen Stroms versorgt sind.

16. Elektrische Maschine (1) mit mehreren Luftspalten (30) und 3D-Magnetfluss nach einem der Ansprüche 1 bis 14,
**dadurch gekennzeichnet, dass** jede Erregereinheit (11) mit einem einphasigen elektrischen Strom versorgt ist.

17. Elektrische Maschine (1) mit mehreren Luftspalten (30) und 3D-Magnetfluss nach einem der Ansprüche 1 bis 16,
**dadurch gekennzeichnet, dass** die ersten Zähne (14) der beiden Außenflanken (131, 132) mindestens eines Jochs (13) winkelgleichmäßig um die Drehachse (2) und abwechselnd auf die beiden Außenflanken (131, 132) verteilt sind.

18. Elektrische Maschine (1) mit mehreren Luftspalten (30) und 3D-Magnetfluss nach einem der Ansprüche 1 bis 17,
**dadurch gekennzeichnet, dass** die ersten Zähne (14) der zwei Außenflanken (131, 132) mindestens eines Jochs (13) einander zugewandt sind.

19. Elektrische Maschine (1) mit mehreren Luftspalten (30) und 3D-Magnetfluss nach einem der Ansprüche 1 bis 18,
**dadurch gekennzeichnet, dass** das Ende jedes zweiten Zahnes (16) der ersten Reihe und der letzten Reihe der Zwischenstücke (15) nicht über die Seite (121) der Wicklung (12) hinausragt.

20. Elektrische Maschine (1) mit mehreren Luftspalten (30) und 3D-Magnetfluss nach einem der Ansprüche 1 bis 18,
**dadurch gekennzeichnet, dass** das Ende jedes zweiten Zahnes (16) der ersten und der letzten Reihe der Zwischenstücke (15) über die Seite (121) der Wicklung (12) hinausragt.

## Claims

1. Electrical machine (1) with several air gaps (30) and 3D magnetic flux comprising:
- an axis of rotation (2),
- a stator (10) provided with an armature (19) and at least one annular exciter unit (11) comprising a coil (12), at least two annular cylinder heads (13a, 13b) and multiple intermediate parts (15), said coil (12) being positioned within said cylinder heads (13) and having at least two faces (121), said cylinder heads (13a, 13b) having multiple first teeth (14), and each intermediate part (15) having two ends forming two second teeth (16),
- a rotor (20) rotating about said axis of rotation (2) and provided with a structure (21) and at least one annular receiver unit (22), each receiver unit (22) comprising multiple magnets (23) and operating in conjunction with a single exciter unit (11), each magnet (23) having a first north pole and a first south pole, one of said first poles being located in front of said exciter unit (11) and the other first pole being located opposite said structure (21) of said rotor (20), the total number of magnets (23) being equal to the total number of said first and second teeth (14,16),
**characterized in that**, each header (13) having at least two flanks including two extreme flanks (131,132), said first teeth (14) of each cylinder head (13) are distributed on said two extreme flanks (131,132) and regularly in an angular manner about said axis of rotation (2) on each end flank (131,132) and said intermediate parts (15) are positioned on at least one annular row on at least two of said faces (121) between said first teeth (14) of two cylinder heads (13) so that one first end of each intermediate part (15) of one first row fits between two first teeth (14) of a cylinder head (13) while maintaining a distance (d) between said second tooth (16) formed firstly by each first end and two first teeth (14) of said cylinder head (14), a second end of each intermediate part (15) of a row fits between two first ends of two intermediate parts (15) of the following row maintaining said distance (d) between said second teeth (16) formed firstly by said second ends of each intermediate part (15) of a row and secondly by the first ends (18) of each intermediate part (15) of the following row and a second end of each intermediate part (15) of a last row fits between two first teeth (14) of said other cylinder head (13) of said face (121) maintaining a distance (d) between said second tooth (16) formed by each second end and said first two teeth (14) of said other cylinder head (13), each first and second tooth (14,16) forming alternately second north poles and second south poles, each intermediate part (15) having a north pole and a south pole, each receiver unit (22) having at least two series (25) of magnets (23), each series (25) consisting of at least two rows (24) of magnets (23) such that two adjacent first poles are of opposite polarity, said magnets (23) being regularly distributed in an angular manner about said axis of rotation (2) on each row (24), each series (25) being located in front of one of said faces (121) on which said intermediate parts (15) are positioned, one of said air gaps (30) being thus formed between each series (25) of magnets (23) and said exciter unit (11), a magnetic flux (F) then circulating in three dimensions in said electric machine (1) and capable of dividing and regrouping at the level of said magnets (23) of said rotor (20) and capable of dividing and regrouping at the level of said cylinder heads (13) of said stator (10).

2. An electrical machine (1) with several air gaps (30) and 3D magnetic flux according to claim 1, **characterized in that** said magnets (23) are permanent magnets.

3. An electrical machine (1) with several air gaps (30) and 3D magnetic flux according to claim 1, **characterized in that** said magnets (23) are non-permanent magnets.

4. An electrical machine (1) with several air gaps (30) and 3D magnetic flux according to any one of claims 1 to 3, **characterized in that** at least one end flank (131,132) of at least two cylinder heads (13) is positioned perpendicular to said axis of rotation (2) so that said magnetic flux (F) flows at least axially in said electric machine (1).

5. An electrical machine (1) with several air gaps (30) and 3D magnetic flux according to any one of claims 1 to 4, **characterized in that** at least one end flank (131, 132) of at least two cylinder heads (13) is positioned parallel to said axis of rotation (2) so that said magnetic flux (F) circulates at least radially in said electric machine (1).

6. An electrical machine (1) with several air gaps (30) and 3D magnetic flux according to any one of claims 1 to 5, **characterized in that** each first and second tooth (14,16) is in the form of a "cat's tongue".

7. An electrical machine (1) with several air gaps (30) and 3D magnetic flux according to any one of claims 1 to 5, **characterized in that** each first and second tooth (14,16) is in the form of a "staircase".

8. An electrical machine (1) with several air gaps (30) and 3D magnetic flux according to any one of claims 1 to 7, **characterized in that** each cylinder head (13) has a chamfer-shaped connection at the foot of each first tooth (14).

9. An electrical machine (1) with several air gaps (30) and 3D magnetic flux according to any one of claims 1 to 8, **characterized in that** at least one exciter unit (11) comprises two cylinder heads (13a, 13b) and operates in conjunction with a receiver unit (22) having two series (25a, 25b) of magnets (23), two air gaps (30a, 30b) located between said exciter unit (11) and said receiver unit (22).

10. An electrical machine (1) with several air gaps (30) and 3D magnetic flux according to any one of claims 1 to 9, **characterized in that** at least one exciter unit (11) comprises three cylinder heads (13a, 13b, 13c) and operates in conjunction with a receiver unit (22) comprising three series (25a, 25b, 25c) of magnets (23), three air gaps (30a, 30b, 30c) located between said exciter unit (11) and said receiver unit (22).

11. An electrical machine (1) with several air gaps (30) and 3D magnetic flux according to any one of claims 1 to 10, **characterized in that** at least one exciter unit (11) comprises four cylinder heads (13a, 13b, 13c, 13d) and operates in conjunction with a receiver unit (22) having four series (25a, 25b, 25c, 25d) of magnets (23), four air gaps (30a, 30b, 30c, 30d) located between said exciter unit (11) and said receiver unit (22).

12. An electrical machine (1) with several air gaps (30) and 3D magnetic flux according to any one of claims 1 to 11, **characterized in that** said stator (10) comprises at least two exciter units (11a, 11b) distributed axially with respect to said axis of rotation (2) and said rotor (20) comprises at least two receiver units (22,22') distributed axially with respect to said axis of rotation (2).

13. An electrical machine (1) with several air gaps (30) and 3D magnetic flux according to any one of claims 1 to 12, **characterized in that** said stator (10) comprises at least two exciter units (11) distributed radially with respect to said axis of rotation (2) and said rotor (20) comprises at least two receiver units (22,22') distributed radially with respect to said axis of rotation (2).

14. An electrical machine (1) with several air gaps (30) and 3D magnetic flux according to any one of claims 12 to 13, **characterized in that** a cylinder head (13) is interposed between two adjacent exciter units (11, 11') and is used jointly by said two adjacent exciter units (11, 11'), two magnetic fluxes (F) relative to said two adjacent exciter units respectively (11, 11') flowing in said cylinder head (13).

15. An electrical machine (1) with several air gaps (30) and 3D magnetic flux according to any one of claims 12 to 14, **characterized in that** at least two exciter units (11a, 11b) are fed by two different phases of a balanced polyphase electrical current.

16. An electrical machine (1) with several air gaps (30) and 3D magnetic flux according to any one of claims 1 to 14, **characterized in that** each exciter unit (11) is powered by single-phase electric current.

17. An electrical machine (1) with several air gaps (30) and 3D magnetic flux according to any one of claims 1 to 16, **characterized in that** said first teeth (14) of said two end flanks (131, 132) of at least one cylinder head (13) are angularly distributed regularly around said axis of rotation (2) and alternately on said two end flanks (131, 132).

18. An electrical machine (1) with several air gaps (30) and 3D magnetic flux according to any one of claims 1 to 17, **characterized in that** said first teeth (14) of said two end flanks (131, 132) of at least one cylinder head (13) are facing each other.

19. An electrical machine (1) with several air gaps (30) and 3D magnetic flux according to any one of claims 1 to 18, **characterized in that** the end of each second tooth (16) of the first row and the last row of said intermediate parts (15) do not extend beyond said face (121) of said coil (12).

20. An electrical machine (1) with several air gaps (30) and 3D magnetic flux according to any one of claims 1 to 18, **characterized in that** the end of each second tooth (16) of the first row and the last row of said intermediate parts (15) extend beyond said face (121) of said coil (12).
